# EUROPEAN PATENT APPLICATION

(11) **EP 4 794 382 A1**
(43) Date of publication of application: **19.08.2026**
(21) Application number: 24884296.5
(22) Date of filing: 20.09.2024
(51) Int. Cl.: H04W 28/08

(54) **COMMUNICATION METHOD AND APPARATUS**

(30) Priority: 31.10.2023 CN 202311442896
(71) Applicant: HUAWEI TECHNOLOGIES CO., LTD., Shenzhen 518129 (CN)
(72) Inventor: GE, Cuili, Shenzhen, Guangdong 518129 (CN); YANG, Yanmei, Shenzhen, Guangdong 518129 (CN); ZHU, Fangyuan, Shenzhen, Guangdong 518129 (CN)
(74) Representative: Isarpatent
(86) International application number: PCT/CN2024/120182
(87) International publication number: WO 2025/092289

(57) **Abstract**

This application relates to a communication method and apparatus. In the communication method, a terminal device may determine an execution node of a computing sub-task in a computing task based on a QoS parameter of the computing task and an available computing resource of the terminal device, where the execution node of the computing sub-task may be a computing network converged node or the terminal device. In other words, the terminal device may autonomously determine the execution node of the computing sub-task in the computing task. This is equivalent to that the terminal device divides the computing task and determines an execution node of the computing task. In this way, when memory resources are limited, a computing sub-task in the computing task may be executed on a corresponding execution node. This ensures that the computing task can be successfully executed, that is, ensures normal running of an application program, thereby improving user experience.

## Description

This application claims priority to Chinese Patent Application No. 202311442896.4, filed with the China National Intellectual Property Administration on October 31, 2023, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a computer system, memory needs to be allocated for an application program on a terminal device. Because memory resources are limited, when too many application programs are started, insufficient memory may be caused, which may cause abnormal running of the application programs, affecting user experience.

### SUMMARY

This application provides a communication method and apparatus, to ensure normal running of an application, thereby improving user experience.

According to a first aspect, a communication method is provided. The method may be performed by a terminal device, or may be performed by a module (for example, a processor, a chip, or a chip system) used in the terminal device, or may be implemented by a logical node, a logical module, or software that can implement all or some functions of the terminal device. In the communication method, a quality of service (quality of service, QoS) parameter of a computing task and an available computing resource of the terminal device may be obtained, so that an execution node of a computing sub-task in the computing task can be determined based on the QoS parameter of the computing task and the available computing resource of the terminal device, where the execution node of the computing sub-task is a computing network converged node or the terminal device.

It can be learned that, in the foregoing embodiment, the terminal device may determine the execution node of the computing sub-task in the computing task based on the QoS parameter of the computing task and the available computing resource of the terminal device, where the execution node of the computing sub-task may be the computing network converged node or the terminal device. In other words, the terminal device may autonomously determine the execution node of the computing sub-task in the computing task. This is equivalent to that the terminal device divides the computing task and determines an execution node of the computing task. In this way, when memory resources are limited, a computing sub-task in the computing task may be executed on a corresponding execution node. This ensures that the computing task can be successfully executed, that is, ensures normal running of an application program, thereby improving user experience. In addition, the execution node of the computing sub-task in the computing task is determined based on the QoS parameter of the computing task and the available computing resource of the terminal device. This can provide QoS guarantee for the computing sub-task. For example, an end-to-end service delay is reduced, and end-to-end delay stability is improved.

With reference to the first aspect, optionally, determining the execution node of the computing sub-task in the computing task based on the QoS parameter of the computing task and the available computing resource of the terminal device includes: there is an association relationship between the computing sub-task and another computing sub-task in the computing task; and determining the execution node of the computing sub-task based on the association relationship, the QoS parameter of the computing task, and the available computing resource of the terminal device.

It can be learned that, in the foregoing embodiment, the terminal device may further determine the execution node of the computing sub-task based on the association relationship between the computing sub-task and the another computing sub-task, so that the terminal device can more accurately determine the execution node of the computing sub-task.

With reference to the first aspect, optionally, the method further includes: determining a first computing QoS parameter of the computing sub-task based on the QoS parameter of the computing task and the available computing resource of the terminal device.

It can be learned that, in the foregoing embodiment, the terminal device may determine the first computing QoS parameter of the computing sub-task based on the QoS parameter of the computing task and the available computing resource of the terminal device. This can provide QoS guarantee for the computing sub-task. In addition, the terminal device autonomously determines the first computing QoS parameter of the computing sub-task, thereby reducing a network negotiation process and making it more convenient.

With reference to the first aspect, optionally, determining the first computing QoS parameter of the computing sub-task based on the QoS parameter of the computing task and the available computing resource of the terminal device includes: there is an association relationship between the computing sub-task and another computing sub-task in the computing task; and determining the first computing QoS parameter based on the association relationship, the QoS parameter of the computing task, and the available computing resource of the terminal device.

It can be learned that, in the foregoing embodiment, the terminal device may further determine the first computing QoS parameter based on the association relationship between the computing sub-task and the another computing sub-task. This can provide more accurate QoS guarantee for the computing sub-task.

With reference to the first aspect, optionally, the method further includes: receiving a first computing QoS parameter of the computing sub-task from a first network element; or receiving the first computing QoS parameter from a second network element.

It can be learned that, in the foregoing embodiment, the terminal device may obtain the first computing QoS parameter from the first network element or the second network element. This can provide QoS guarantee for the computing sub-task.

With reference to the first aspect, optionally, the method further includes: sending first information to the first network element, where the first information is used to obtain the first computing QoS parameter, the first information includes the QoS parameter of the computing task and/or identification information of the computing task, the identification information of the computing task is used to determine the QoS parameter of the computing task, and the first computing QoS parameter is determined based on the QoS parameter of the computing task.

It can be learned that, in the foregoing embodiment, the terminal device may request a computing QoS parameter from the first network element, so that the first network element can determine the computing QoS parameter based on the QoS parameter of the computing task. This can provide QoS guarantee for the computing sub-task.

With reference to the first aspect, optionally, the method further includes: sending the available computing resource of the terminal device to the first network element. That the first computing QoS parameter is determined based on the QoS parameter of the computing task includes: The first computing QoS parameter is determined based on the QoS parameter of the computing task and the available computing resource of the terminal device.

It can be learned that, in the foregoing embodiment, the terminal device may further send the available computing resource of the terminal device to the first network element, so that the first network element can determine the first computing QoS parameter based on the QoS parameter of the computing task and the available computing resource of the terminal device. This can provide more accurate QoS guarantee for the computing sub-task.

With reference to the first aspect, optionally, the method further includes: there is an association relationship between the computing sub-task and another computing sub-task in the computing task; and sending the association relationship to the first network element. That the first computing QoS parameter is determined based on the QoS parameter of the computing task and the available computing resource of the terminal device includes: The first computing QoS parameter is determined based on the association relationship, the QoS parameter of the computing task, and the available computing resource of the terminal device.

It can be learned that, in the foregoing embodiment, the terminal device may further send the association relationship between the computing sub-task and the another computing sub-task to the first network element, so that the first network element can further determine the first computing QoS parameter based on the association relationship. This can provide more accurate QoS guarantee for the computing sub-task.

With reference to the first aspect, optionally, the method further includes: sending second information to the first network element, where the second information indicates that the execution node of the computing sub-task is the computing network converged node or the terminal device.

With reference to the first aspect, optionally, the second information includes the first computing QoS parameter of the computing sub-task.

With reference to the first aspect, optionally, the second information indicates that the execution node of the computing sub-task is the computing network converged node, and the method further includes: receiving an access address of the computing sub-task from the second network element, where the access address is an address of a first computing network converged node or an address of a gateway of the first computing network converged node, and the first computing network converged node is a node that executes the computing sub-task.

It can be learned that, in the foregoing embodiment, the terminal device may further learn of the access address of the computing sub-task, so that the terminal device can obtain an execution result of the computing sub-task by using the access address. This can ensure that the computing task is successfully executed, that is, can ensure normal running of an application program, thereby improving user experience.

With reference to the first aspect, optionally, the method further includes: sending third information to the second network element, where the third information is used to obtain the access address.

With reference to the first aspect, optionally, the second information includes the first computing QoS parameter of the computing sub-task, and the method further includes: receiving fourth information from the first network element, where the fourth information indicates whether the first computing QoS parameter is allowed to be used or not, or the fourth information indicates a second computing QoS parameter of the computing sub-task.

It can be learned that, in the foregoing embodiment, the first network element may authorize or modify a computing QoS parameter, so that the computing QoS parameter of the computing sub-task can be more flexibly determined.

With reference to the first aspect, optionally, the fourth information indicates that the first computing QoS parameter is not allowed to be used, and the fourth information further indicates the second computing QoS parameter.

It can be learned that, in the foregoing embodiment, when refusing to allow the terminal device to use the first computing QoS parameter, the first network element may further indicate the second computing QoS parameter to the terminal device by using the fourth information, so that the terminal device can still provide QoS guarantee for the computing sub-task based on the second computing QoS parameter.

With reference to the first aspect, optionally, the method further includes: indicating, to the first network element, that the first computing QoS parameter is allowed to be modified.

According to a second aspect, a communication method is provided. The method may be performed by a terminal device, or may be performed by a module (for example, a processor, a chip, or a chip system) used in the terminal device, or may be implemented by a logical node, a logical module, or software that can implement all or some functions of the terminal device. In the communication method, information about a computing sub-task in a computing task may be sent to a first network element, where the information about the computing sub-task indicates that an execution node of the computing sub-task is to be specified, so that first information from the first network element can be received, where the first information indicates that the execution node of the computing sub-task is a computing network converged node or the terminal device.

It can be learned that, in the foregoing embodiment, the terminal device may send the information about the computing sub-task in the computing task to the first network element, so that the first network element can learn that the execution node of the computing sub-task is to be specified, to indicate the execution node of the computing sub-task to the terminal device. This is equivalent to that the first network element divides the computing task, and indicates the execution node of the computing sub-task to the terminal device. In this way, when memory resources are limited, it may be ensured that a computing sub-task in the computing task may be executed on a corresponding execution node. This ensures that the computing task can be successfully executed, that is, ensures normal running of an application program, thereby improving user experience.

With reference to the second aspect, optionally, the method further includes: obtaining a quality of service QoS parameter of the computing task and an available computing resource of the terminal device; and generating the information about the computing sub-task based on the QoS parameter of the computing task and the available computing resource of the terminal device.

With reference to the second aspect, optionally, generating the information about the computing sub-task based on the QoS parameter of the computing task and the available computing resource of the terminal device includes: there is an association relationship between the computing sub-task and another computing sub-task in the computing task; and generating the information about the computing sub-task based on the association relationship, the QoS parameter of the computing task, and the available computing resource of the terminal device.

With reference to the second aspect, optionally, the method further includes: receiving a first computing QoS parameter of the computing sub-task from the first network element; or receiving the first computing QoS parameter from a second network element.

It can be learned that, in the foregoing embodiment, the terminal device may obtain the first computing QoS parameter from the first network element or the second network element. This can provide QoS guarantee for the computing sub-task.

With reference to the second aspect, optionally, the method further includes: sending second information to the first network element, where the second information is used to request to obtain the first computing QoS parameter, the second information includes the QoS parameter of the computing task and/or identification information of the computing task, the identification information of the computing task is used to determine the QoS parameter of the computing task, and the first computing QoS parameter is determined based on the QoS parameter of the computing task.

It can be learned that, in the foregoing embodiment, the terminal device may request the first computing QoS parameter from the first network element, so that the first network element can determine the first computing QoS parameter based on the QoS parameter of the computing task. This can provide QoS guarantee for the computing sub-task.

With reference to the second aspect, optionally, the method further includes: sending the available computing resource of the terminal device to the first network element. That the first computing QoS parameter is determined based on the QoS parameter of the computing task includes: The first computing QoS parameter is determined based on the QoS parameter of the computing task and the available computing resource of the terminal device.

It can be learned that, in the foregoing embodiment, the terminal device may further send the available computing resource of the terminal device to the first network element, so that the first network element can determine the first computing QoS parameter based on the QoS parameter of the computing task and the available computing resource of the terminal device. This can provide more accurate QoS guarantee for the computing sub-task.

With reference to the second aspect, optionally, the method further includes: there is an association relationship between the computing sub-task and another computing sub-task in the computing task; and sending the association relationship to the first network element. That the first computing QoS parameter is determined based on the QoS parameter of the computing task and the available computing resource of the terminal device includes: The first computing QoS parameter is determined based on the association relationship, the QoS parameter of the computing task, and the available computing resource of the terminal device.

It can be learned that, in the foregoing embodiment, the terminal device may further send the association relationship between the computing sub-task and the another computing sub-task to the first network element, so that the first network element can further determine the first computing QoS parameter based on the association relationship. This can provide more accurate QoS guarantee for the computing sub-task.

With reference to the second aspect, optionally, the method further includes: receiving an access address of the computing sub-task from the second network element, where the access address is an address of a first computing network converged node or an address of a gateway of the first computing network converged node, and the first computing network converged node is a node that executes the computing sub-task.

It can be learned that, in the foregoing embodiment, the terminal device may further learn of the access address of the computing sub-task, so that the terminal device can obtain an execution result of the computing sub-task by using the access address. This can ensure that the computing task is successfully executed, that is, can ensure normal running of an application program, thereby improving user experience.

With reference to the second aspect, optionally, the method further includes: sending third information to the second network element, where the third information is used to obtain the access address.

With reference to the second aspect, optionally, the information about the computing sub-task further indicates an execution node of the computing sub-task that is expected by the terminal device; and the terminal device expects the execution node of the computing sub-task to be the terminal device, and the first information indicates that the execution node of the computing sub-task is the computing network converged node; or the terminal device expects the execution node of the computing sub-task to be the computing network converged node, and the first information indicates that the execution node of the computing sub-task is the terminal device.

According to a third aspect, a communication method is provided. The method may be performed by a first network element, or may be performed by a module (for example, a processor, a chip, or a chip system) used in the first network element, or may be implemented by a logical node, a logical module, or software that can implement all or some functions of the first network element. In the communication method, information about a computing sub-task in a computing task may be received from a terminal device, where the information about the computing sub-task indicates that an execution node of the computing sub-task is to be specified, so that first information can be sent to the terminal device, where the first information indicates that the execution node of the computing sub-task is a computing network converged node or the terminal device.

It can be learned that, in the foregoing embodiment, the first network element may receive the information about the computing sub-task in the computing task from the terminal device, so that the first network element can learn that the execution node of the computing sub-task is to be specified, to indicate the execution node of the computing sub-task to the terminal device. This is equivalent to that the first network element divides the computing task, and indicates the execution node of the computing sub-task to the terminal device. In this way, when memory resources are limited, it may be ensured that a computing sub-task in the computing task may be executed on a corresponding execution node. This ensures that the computing task can be successfully executed, that is, ensures normal running of an application program, thereby improving user experience.

With reference to the third aspect, optionally, the method further includes: sending a first computing QoS parameter of the computing sub-task to the terminal device; or sending fifth information to a second network element, where the fifth information includes the first computing QoS parameter.

It can be learned that, in the foregoing embodiment, the first network element may send the first computing QoS parameter of the computing sub-task to the terminal device, or the first network element may send the fifth information to the second network element, so that the second network element can send the first computing QoS parameter to the terminal device. In this way, the terminal device can learn of the first computing QoS parameter. This can provide QoS guarantee for the computing sub-task.

With reference to the third aspect, optionally, the method further includes: receiving second information from the terminal device, where the second information is used to request to obtain the first computing QoS parameter, the second information includes a QoS parameter of the computing task and/or identification information of the computing task, and the identification information of the computing task is used to determine the QoS parameter of the computing task; and determining the first computing QoS parameter based on the QoS parameter of the computing task.

It can be learned that, in the foregoing embodiment, after obtaining a request of the terminal device, the first network element may determine the first computing QoS parameter based on the QoS parameter of the computing task. This can provide QoS guarantee for the computing sub-task.

With reference to the third aspect, optionally, the method further includes: receiving an available computing resource from the terminal device. Determining the first computing QoS parameter based on the QoS parameter of the computing task includes: determining the first computing QoS parameter based on the QoS parameter of the computing task and the available computing resource.

It can be learned that, in the foregoing embodiment, the first network element may further receive the available computing resource of the terminal device, so that the first network element can determine the first computing QoS parameter based on the QoS parameter of the computing task and the available computing resource of the terminal device. This can provide more accurate QoS guarantee for the computing sub-task.

With reference to the third aspect, optionally, the method further includes: there is an association relationship between the computing sub-task and another computing sub-task in the computing task; and receiving the association relationship from the terminal device. Determining the first computing QoS parameter based on the QoS parameter of the computing task and the available computing resource includes: determining the first computing QoS parameter based on the association relationship, the QoS parameter of the computing task, and the available computing resource.

It can be learned that, in the foregoing embodiment, the first network element may further receive the association relationship between the computing sub-task and the another computing sub-task, so that the first network element can further determine the first computing QoS parameter based on the association relationship. This can provide more accurate QoS guarantee for the computing sub-task.

With reference to the third aspect, optionally, the fifth information further indicates the second network element to determine an access address of the computing sub-task, the access address is an address of a first computing network converged node or an address of a gateway of the first computing network converged node, and the first computing network converged node is a node that executes the computing sub-task.

With reference to the third aspect, optionally, the method further includes: obtaining a computing resource of at least one computing network converged node and transmission status information between the terminal device and the first network element; and determining the execution node of the computing sub-task based on the available computing resource of the terminal device, the computing resource of the at least one computing network converged node, and the transmission status information between the terminal device and the first network element.

It can be learned that, in the foregoing embodiment, the first network element may determine the execution node of the computing sub-task with reference to various types of information. This is equivalent to that a computing delay of the computing sub-task and a transmission delay of a computation result of the computing sub-task are comprehensively considered, so that the computing sub-task can achieve good computing QoS in different network environments and computing resources. In addition, computing and transmission are considered in a centralized manner, so that system capacity can be further increased, system resource utilization can be increased, and computing output costs of a single computing sub-task can be reduced.

With reference to the third aspect, optionally, determining the execution node of the computing sub-task based on the available computing resource of the terminal device, the computing resource of the at least one computing network converged node, and the transmission status information between the terminal device and the first network element includes: determining the execution node of the computing sub-task based on the available computing resource of the terminal device, the computing resource of the at least one computing network converged node, the transmission status information between the terminal device and the first network element, and an association relationship between the computing sub-task and another computing sub-task.

It can be learned that, in the foregoing embodiment, the first network element may further determine the execution node of the computing sub-task with reference to the available computing resource of the terminal device and the association relationship between the computing sub-task and the another computing sub-task. This can better increase system resource utilization, and can also better reduce computing output costs of a single computing sub-task.

According to a fourth aspect, a communication method is provided. The method may be performed by a second network element, or may be performed by a module (for example, a processor, a chip, or a chip system) used in the second network element, or may be implemented by a logical node, a logical module, or software that can implement all or some functions of the second network element. In the communication method, an access address of a computing sub-task in a computing task may be sent to a terminal device, where the access address is an address of a first computing network converged node or an address of a gateway of the first computing network converged node, and the first computing network converged node is a node that executes the computing sub-task.

It can be learned that, in the foregoing embodiment, the second network element may indicate the access address of the computing sub-task to the terminal device, so that the terminal device can obtain an execution result of the computing sub-task by using the access address. This can ensure that the computing task is successfully executed, that is, can ensure normal running of an application program, thereby improving user experience.

With reference to the fourth aspect, optionally, the method may further include: sending a first computing QoS parameter of the computing sub-task to the terminal device.

It can be learned that, in the foregoing embodiment, the second network element may send the first computing QoS parameter of the computing sub-task to the terminal device. In this way, the terminal device can learn of the first computing QoS parameter. This can provide QoS guarantee for the computing sub-task.

With reference to the fourth aspect, optionally, the method may further include: receiving third information from the terminal device, where the third information is used to obtain the access address.

With reference to the fourth aspect, optionally, the method may further include: receiving fifth information from a first network element, where the fifth information includes the first computing QoS parameter of the computing sub-task.

It can be learned that, in the foregoing embodiment, the second network element may obtain the first computing QoS parameter of the computing sub-task, so that the second network element can send the first computing QoS parameter to the terminal device. In this way, the terminal device can learn of the first computing QoS parameter. This can provide QoS guarantee for the computing sub-task.

With reference to the fourth aspect, optionally, the fifth information further indicates the second network element to determine the access address of the computing sub-task.

According to a fifth aspect, a communication apparatus is provided, including a unit or module configured to implement the method according to any one of the implementations of any one of the first aspect to the fourth aspect. The communication apparatus may be a terminal device or a first network element, or may be a module (for example, a processor, a chip, or a chip system) in the terminal device or the first network element, or may be a logical node, a logical module, or software that can implement all or some functions of the terminal device or the first network element.

According to a sixth aspect, a communication apparatus is provided. The communication apparatus includes at least one processor. The at least one processor is configured to perform the method according to any one of the implementations of any one of the first aspect to the fourth aspect. The communication apparatus may be a terminal device or a first network element, or may be a module (for example, a processor, a chip, or a chip system) in the terminal device or the first network element, or may be a logical node, a logical module, or software that can implement all or some functions of the terminal device or the first network element. The at least one processor may execute a computer program or instructions in a storage, so that the foregoing method is performed. The storage may be included in the communication apparatus, or may be located outside the communication apparatus. In addition, the communication apparatus may further include an interface.

According to a seventh aspect, a computer-readable storage medium is provided. The computer-readable storage medium stores computer instructions. When the computer instructions are executed, a computer is enabled to perform the method according to any one of the implementations of any one of the first aspect to the fourth aspect.

According to an eighth aspect, a computer program product is provided. The computer program product includes computer program code. When the computer program code is run on a computer, the computer is enabled to perform the method according to any one of the implementations of any one of the first aspect to the fourth aspect.

According to a ninth aspect, a chip is provided. The chip includes at least one processor and an interface. The processor is configured to read and execute instructions stored in a storage. When the instructions are run, the chip is enabled to perform the method according to any one of the implementations of any one of the first aspect to the fourth aspect.

### BRIEF DESCRIPTION OF DRAWINGS

FIG. 1 shows a basic architecture of a communication system according to an embodiment of this application;
FIG. 2 is a diagram of a specific possible network architecture to which an embodiment of this application is applicable;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a diagram of a computing task completion time according to an embodiment of this application;
FIG. 8 is a diagram of another computing task completion time according to an embodiment of this application;
FIG. 9 is a schematic flowchart of another communication method according to an embodiment of this application;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. Terms "system" and "network" may be used interchangeably in embodiments of this application. Unless otherwise specified, "/" indicates that associated objects are in an "or" relationship. For example, A/B may represent A or B. In this application, "and/or" merely describes an association relationship between associated objects and indicates that three relationships may exist. For example, A and/or B may represent three cases: Only A exists, both A and B exist, and only B exists, where A and B may be singular or plural. In addition, in the descriptions of this application, unless otherwise specified, "a plurality of" means two or more. In addition, "at least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements and purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It should be understood that the technical solutions in embodiments of this application may be applied to a long term evolution (long term evolution, LTE) architecture, a 5th generation mobile communication technology (5th generation mobile networks, 5G), a wireless local area network (wireless local area network, WLAN) system, a vehicle-to-everything (vehicle-to-everything, V2X) communication system, LTE-vehicle (LTE-vehicle, LTE-V), vehicle-to-vehicle (vehicle to vehicle, V2V), internet of vehicles, machine type communication (machine type communication, MTC), and the like. The technical solutions in embodiments of this application may be further applied to another future communication system, for example, a 6G communication system. In a future communication system, a same function may be maintained, but a name may be changed.

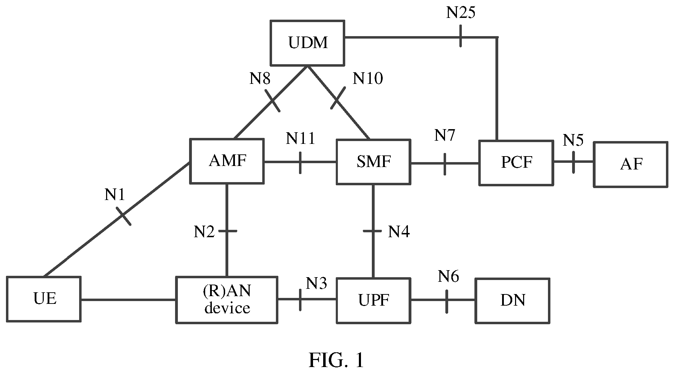

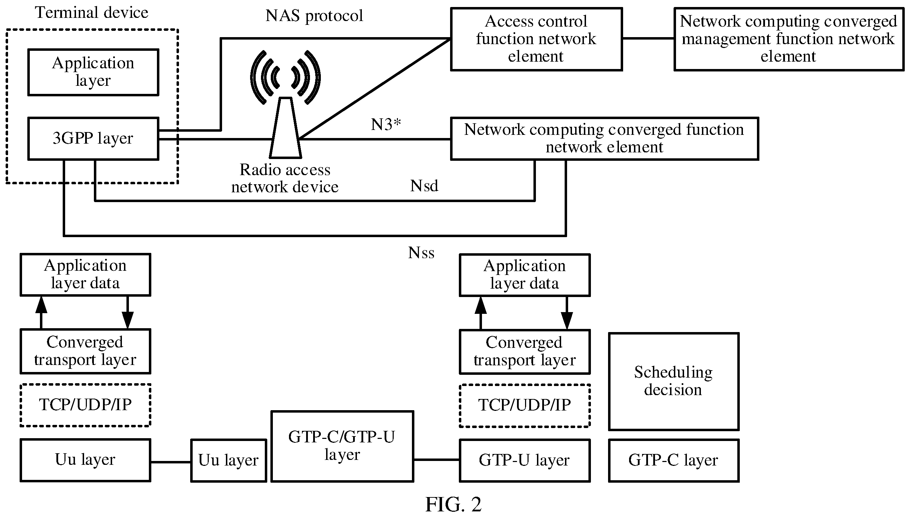

With reference to FIG. 1 or FIG. 2, the following describes a basic architecture of a communication system to which an embodiment of this application is applicable.

As shown in FIG. 1, the communication system may include a data network (data network, DN) and an operator network. The following briefly describes functions of some network elements in the architecture.

The operator network may include one or more of the following network elements: an authentication server function (Authentication Server Function, AUSF) network element, a network exposure function (network exposure function, NEF) network element, a policy control function (policy control function, PCF) network element, a unified data management (unified data management, UDM) network element, a unified data repository (Unified Data Repository, UDR), a network repository function (Network Repository Function, NRF) network element, an application function (application function, AF) network element, an access and mobility management function (access and mobility management function, AMF) network element, a session management function (session management function, SMF) network element, a radio access network (radio access network, RAN) device, a user plane function (user plane function, UPF) network element, a network slice selection function (Network Slice Selection Function, NSSF) network element (not shown in the figure), and the like. In the operator network, a network element or a device other than the radio access network device may be referred to as a core network element or a core network device.

The radio access network device may be an apparatus deployed in a radio access network (radio access network, RAN) to provide a wireless communication function for a terminal device. The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6G mobile communication system, a base station in a future mobile communication system, an access node in a wireless fidelity (wireless fidelity, Wi-Fi) system, or the like; or may be a module or a unit that completes some functions of a base station, for example, may be a central unit (central unit, CU), a distributed unit (distributed unit, DU), a CU-control plane (control plane, CP), a CU-user plane (user plane, UP), or a radio unit (radio unit, RU). The radio access network device may be a macro base station, a micro base station, or an indoor base station, or may be a relay node, a donor node, or the like. Alternatively, the radio access network device may be an open access network (open RAN, O-RAN or ORAN), a baseband pool (BBU pool) in a cloud radio access network (cloud radio access network, CRAN), a radio frequency unit (remote radio unit, RRU), or the like. A specific technology and a specific device form that are used by the radio access network device are not limited in embodiments of this application.

A terminal device communicating with the RAN may also be referred to as user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine type communication (machine type communication, MTC), internet of things (internet of things, IoT), virtual reality, augmented reality, industrial control, autonomous driving, telemedicine, smart grid, smart furniture, smart office, smart wearables, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal device are not limited in embodiments of this application.

The radio access network device and the terminal device may be at fixed locations, or are movable. The radio access network device and the terminal device may be deployed on land, including indoor, outdoor, handheld, or vehicle-mounted devices, or may be deployed on water, or may be deployed on an airplane, a balloon, or an artificial satellite in the air. Application scenarios of the radio access network device and the terminal device are not limited in embodiments of this application.

The AMF network element performs functions such as mobility management and access authentication/authorization. In addition, the AMF network element is further responsible for transferring a user policy between the terminal device and the PCF.

The SMF network element performs functions such as session management, execution of a control policy delivered by the PCF, UPF selection, and internet protocol (internet protocol, IP) address allocation for the terminal device.

The UPF network element, serving as an interface UPF to the data network, completes functions such as user plane data forwarding, session/flow level-based charging statistics collection, and bandwidth throttling.

The UDM network element performs functions such as subscription data management and user access authorization.

The UDR performs functions of storage and retrieval of subscription data, policy data, application data, and other types of data.

The NEF network element is configured to support exposure of capabilities and events.

The AF network element transfers a requirement of an application side for a network side, for example, a QoS requirement or a user status event subscription. The AF may be a third-party functional entity, or may be an operator-deployed application service, for example, an IP multimedia subsystem (IP Multimedia Subsystem, IMS) voice call service.

The PCF network element is responsible for policy control functions such as session-level and service flow-level charging, QoS bandwidth guarantee, mobility management, and terminal device policy decision making.

The NRF network element may be configured to provide a network element discovery function, and provide, based on a request of another network element, network element information corresponding to a network element type. The NRF further provides network element management services, for example, network element registration, update, and deregistration, and network element status subscription and push.

The AUSF network element is responsible for authenticating a user, to determine whether the user or a device is allowed to access a network.

The NSSF network element is configured to select a network slice, count users in the network slice, and the like.

The DN is a network located outside the operator network. The operator network may access a plurality of DNs, and a plurality of services may be deployed on the DN, to provide services such as data and/or a voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company. The DN may include a plurality of application servers (application server, AS), and each AS may provide at least one service.

In the architecture shown in FIG. 1, names and functions of interfaces between network elements are as follows:
(1) N1: N1 is an interface between the AMF and the terminal device, and may be configured to transfer a QoS control rule and the like to the terminal device.
(2) N2: N2 is an interface between the AMF and the RAN, and may be configured to transfer radio bearer control information and the like from a core network side to the RAN.
(3) N3: N3 is an interface between the RAN and the UPF, and is mainly configured to transfer uplink and downlink user plane data between the RAN and UPF.
(4) N4: N4 is an interface between the SMF and the UPF, and may be configured to transfer information between a control plane and a user plane, including delivering a forwarding rule, a QoS control rule, a traffic statistics rule, or the like from the control plane to the user plane, and reporting user plane information.
(5) N5: N5 is an interface between the AF and the PCF, and may be configured to deliver an application service request and report a network event.
(6) N6: N6 is an interface between the UPF and the DN, and is configured to transfer uplink and downlink user data flows between the UPF and the DN.
(7) N7: N7 is an interface between the PCF and the SMF, and may be configured to deliver control policies at a protocol data unit (protocol data unit, PDU) session granularity and a service data flow granularity.
(8) N8: N8 is an interface between the AMF and the UDM, and may be used by the AMF to obtain access and mobility management-related subscription data and authentication data from the UDM, used by the AMF to register current mobility management-related information of the terminal device with the UDM, and the like.
(9) N9: N9 is a user plane interface between UPFs, and is configured to transfer uplink and downlink user data flows between the UPFs.
(10) N10: N10 is an interface between the SMF and the UDM, and may be used by the SMF to obtain session management-related subscription data from the UDM, used by the SMF to register current session-related information of the terminal device with the UDM, and the like.
(11) N11: N11 is an interface between the SMF and the AMF, and may be configured to transfer PDU session tunnel information between the RAN and the UPF, transfer a control message to be sent to the terminal device, transfer radio resource control information to be sent to the RAN, and the like.
(12) N12: N12 is an interface between the AMF and the AUSF, and may be used by the AMF to initiate an authentication procedure to the AUSF, where an SUCI may be carried as a subscription identifier.
(13) N13: N13 is an interface between the UDM and the AUSF, and may be used by the AUSF to obtain a user authentication vector from the UDM to perform an authentication procedure.
(14) N15: N15 is an interface between the PCF and the AMF, and may be configured to deliver a terminal device policy and an access control-related policy.
(15) N35: N35 is an interface between the UDM and the UDR, and may be used by the UDM to obtain user subscription data information from the UDR.
(16) N36: N36 is an interface between the PCF and the UDR, and may be used by the PCF to obtain policy-related subscription data and application data-related information from the UDR.
(17) N25: N25 is an interface between the PCF and the UDM, and may be used for communication between the PCF and the UDM.

As shown in FIG. 2, the communication system includes an access network and a core network.

The access network may include a radio access network device and at least one terminal device that communicates with the radio access network device. For the radio access network device and the terminal device, refer to the descriptions in FIG. 1. Details are not described herein again.

A core network device is a device that provides service support for the terminal device in the core network. As shown in FIG. 2, the core network device includes an access control function network element, a network computing converged function (network computing converged function, NCCF) network element, a network computing converged management function (computing management function, CMF) network element, and the like.

The access control function network element is configured to perform access management and mobility management on the terminal device, such as user location update, network registration, and cell handover. Functions of the access control function network element are similar to those of the AMF network element in FIG. 1.

The NCCF network element may also be referred to as a computing network converged function (computing network converged function, CNCF) network element, and is configured to receive and send core network service data, cache data, and the like. For example, in a downlink direction, the NCCF network element may send downlink data to a radio access network device, and the radio access network device forwards the downlink data to a corresponding terminal device; and in an uplink direction, the NCCF network element may receive uplink data from the terminal device through the radio access network device. The NCCF network element further provides a computing service (or referred to as a microservice) (computing service) or the like for the terminal device. The computing service is a service using software and hardware resources of a device (such as the NCCF network element) to implement logical computing. The NCCF network element can provide communication functions and network functions virtualization (network functions virtualization, NFVI). For example, the NCCF network element may invoke API call information required by an application programming interface (Application Programming Interface, API) of a microservice, transmit an application layer data flow associated with the microservice, and transmit hypertext transfer protocol information (http message) between a global wide area network (Web) browser and a web server (Web server). The NCCF network element may further provide an application (application, APP) computing service, which may be specifically a rendering service, for example, rendering of a picture, a video, or a model object that is output by modeling software. The NCCF network element may further provide an artificial intelligence (artificial intelligence, AI) service, for example, AI inference computing or video/picture recognition.

The CMF network element is mainly responsible for one or more of the following: selecting a proper NCCF network element based on a service request of the terminal device; and establishing a corresponding network layer bearer (or referred to as a session, or referred to as a session and user plane channel) between the terminal device and the NCCF network element based on a request of the terminal device or the NCCF network element. A network session management function of the CMF network element is similar to that of the SMF network element and the PCF network element in FIG. 1. The CMF network element is further configured to select an NCCF network element based on an input parameter related to a computing service provided by the terminal device or the NCCF network element. A function of the CMF network element is similar to a function of domain name system (domain name system, DNS) service selection.

In addition, FIG. 2 further shows an internal protocol architecture of a device. Details are as follows:

The terminal device may include an application layer and a 3rd generation partnership project (3rd generation partnership project, 3GPP) communication layer. The 3GPP communication layer includes a converged transport layer and a Uu layer. The Uu layer may be a protocol layer related to a Uu air interface, for example, include at least one of a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer. Optionally, the 3GPP communication layer may further include a transmission control protocol (transmission control protocol, TCP)/user datagram protocol (user datagram protocol, UDP)/internet protocol (internet protocol, IP) layer.

The radio access network device may include the Uu layer. The radio access network device may further support a general packet radio service tunneling protocol-control plane (general packet radio service tunnelling protocol-control plane, GTP-C)/general packet radio service tunneling protocol-user plane (general packet radio service tunnelling protocol-user plane, GTP-U) layer. The GTP protocol is on top of protocols such as TCP, UDP, and IP. The radio access network device may support a general packet radio service (general packet radio service, GPRS) communication protocol. The GTP-U is used to transmit user plane data, and the GTP-C is used to transmit control plane signaling.

The NCCF network element supports the converged transport layer and the GTP-U layer on a data plane. Optionally, the NCCF network element may further include the TCP/UDP/IP layer on the data plane. The NCCF network element includes a scheduling decision layer, the GTP-C layer, and the like on a control plane. Downlink data transmission is used as an example. The NCCF network element encapsulates application layer data (which may be considered as downlink data) generated by the application layer through the converged transport layer, the TCP/UDP/IP layer, and the GTP-U layer in sequence, and sends the encapsulated data to the radio access network device. The radio access network device decapsulates the downlink data by using the GTP-U layer, encapsulates the downlink data by using the Uu layer, and sends the downlink data to the terminal device. The terminal device decapsulates the downlink data through the Uu layer, the TCP/UDP/IP layer, and the converged transport layer in sequence, to obtain the application layer data. The terminal device may further communicate with the access control function network element by using a non-access stratum (non-access stratum, NAS) protocol. It should be noted that a user plane interface between the terminal device and the NCCF network element is Nsd, and is configured to transmit data plane data. A control plane interface between the terminal device and the NCCF network element is Nss, and is configured to transmit control plane signaling. Optionally, when the control plane is tightly coupled, there may be no control plane interface Nss between the terminal device and the NCCF network element. An interface between the radio access network device and the NCCF network element is N3*, and the N3* interface may implement joint scheduling of N3 and the application layer. Optionally, the N3* interface may be implemented based on at least one protocol such as quick UDP internet connection (quick UDP internet connection, QUIC) and remote direct memory access (remote direct memory access, RDMA).

It may be understood that the network elements or functions shown in FIG. 1 and FIG. 2 may be network elements in a hardware device, software functions running on dedicated hardware, or virtualized functions instantiated on a platform (for example, a cloud platform). In a possible implementation, the network elements or functions may be implemented by one device, or may be jointly implemented by a plurality of devices, or may be one functional module in one device. This is not specifically limited in embodiments of this application. In addition, for ease of description, "network element" may be omitted below. For example, the CMF network element and the CMF in embodiments of this application express a same meaning. For ease of description only, two words "network element" are omitted, and other terms are similar.

To facilitate understanding of content of the solutions, the following further explains and describes some terms in embodiments of this application, to facilitate understanding by a person skilled in the art. This part is merely for ease of understanding, and cannot be considered as a specific limitation on this application.

A computing task (computing task) is used to implement a computing service. Optionally, the computing task may be an independent functional unit, and may be invoked by another functional module in a terminal device, an application client, or a server. For example, the computing task may be executed on the terminal device, or may be executed on a cloud virtual machine or a container.

In this application, the computing task may be uniquely identified by using identification information of the computing task. The identification information of the computing task is an identifier that can be identified by an application layer (including an enabler layer (enabler layer), a middleware (middleware) layer, and the like), a server, a client, and a network element in a mobile communication network. The identification information of the computing task may be allocated by the application layer (for example, the server) and released to a network, or is allocated by the network and used by the application layer (for example, the server or the client). The enabler layer is configured to provide one or more abstract interfaces for the application layer, so that the application layer can conveniently and friendly use underlying hardware or a network communication computing module. The middleware layer may be a logical layer located above a communication module, for example, a 3GPP modem (modem). It may also be understood that the middleware layer is located at a function layer above an access layer protocol (AN protocol) of the terminal device, and may be specifically located in an operating system of the terminal device or at an upper layer of the operating system. The operating system may be any one or more computer operating systems that implement service processing by using a process (process), for example, a Linux operating system, a Unix operating system, an Android operating system, an iOS operating system, a Windows operating system, or a Harmony operating system (Harmony operating system, OS).

The computing task may include at least one computing sub-task (sub-task or child task). The computing sub-task is code used to implement a specific computing function, and may also be referred to as a computing function or a subprogram. Therefore, it may also be considered that the computing task is a program that can implement a specific function by invoking a series of computing functions. Optionally, the computing task may be provided by the terminal device, an AF, an AS, or a mobile operator (mobile network operator, MNO), and the computing sub-task may be provided by the terminal device, the AF, the AS, or the MNO.

There may be an association relationship between computing sub-tasks in the computing task. The association relationship may be an invoking relationship. For example, a computing sub-task invokes another computing sub-task, or the computing sub-task is invoked by the another computing sub-task. Alternatively, the association relationship may be a progressive relationship. For example, an input of the computing sub-task is an output of the another computing sub-task in the computing task, or an output of the computing sub-task is an input of the another computing sub-task. Alternatively, the association relationship may be a parallel relationship. For example, inputs and outputs of a plurality of computing sub-tasks are independent. Optionally, the another computing sub-task may be one or more computing sub-tasks other than the computing sub-task in the computing task.

It should be noted that, in this application, the association relationship may be referred to as a dependency relationship. When an input of a computing sub-task is an output of another computing sub-task, an output of the computing sub-task is an input of the another computing sub-task, the computing sub-task invokes the another computing sub-task, or the computing sub-task is invoked by the another computing sub-task, it may be considered that there is a strong dependency relationship between the computing sub-task and the another computing sub-task.

For example, if the input of the computing sub-task is the output of the another computing sub-task or the output of the computing sub-task is the input of the another computing sub-task, it may be considered that there is a strong data dependency relationship between the computing sub-task and the another computing sub-task.

For another example, if the computing sub-task invokes the another computing sub-task or the computing sub-task is invoked by the another computing sub-task, it may be considered that there is a strong procedure dependency relationship between the computing sub-task and the another computing sub-task.

In this application, the computing sub-task may be identified by using identification information of the computing sub-task, for example, a name of the computing sub-task or an address index of the computing sub-task. Optionally, the address index of the computing sub-task may be a uniform resource locator (uniform resource locator, URL), a character string, or the like.

In addition, to better ensure execution of the computing task in different network environments, a QoS parameter of the computing task may be used to represent/describe a performance requirement of the computing task. The QoS parameter of the computing task includes at least one of the following: a delay, a bandwidth, a delay jitter, a compute resource, and the like. The delay of the computing task indicates a time requirement for completing the computing task. For example, when the delay is set to t1, it indicates that the computing task needs to be completed within 0 to t1. The bandwidth of the computing task indicates a minimum transmission bandwidth of the computing task. The delay jitter of the computing task represents a variable interval of a computing task completion time. For example, when the jitter is set to [0, t2], it indicates that the computing task completion time may be [0, t1+t2]. The compute resource of the computing task represents a minimum set of computing resources of the computing task. Certainly, for the computing sub-task in the computing task, a computing QoS parameter may also be used to represent/describe a performance requirement of the computing sub-task. The computing QoS parameter includes at least one of the following: a delay, a jitter, a bandwidth, a compute resource, and the like. The delay of the computing sub-task indicates a time requirement for completing the computing sub-task. For example, when the delay is set to t3, it indicates that the computing task needs to be completed within 0 to t3. The bandwidth of the computing sub-task indicates a minimum transmission bandwidth of the computing sub-task. The delay jitter of the computing sub-task represents a variable interval of a computing sub-task completion time. For example, when the jitter is set to [0, t4], it indicates that the computing sub-task completion time may be [0, t3+t4]. The compute resource of the computing sub-task represents a minimum set of computing resources corresponding to the computing sub-task.

Optionally, the QoS parameter may also be referred to as a QoS requirement, a service level agreement (service level agreement, SLA) parameter, an SLA requirement, a key performance indicator (Key performance indicator, KPI), or the like. Similarly, the computing QoS parameter may also be referred to as a computing QoS requirement, a computing SLA parameter, a computing SLA requirement, a computing KPI, or the like. Names of the QoS parameter and the computing QoS parameter are not limited in this application.

The computing resource mentioned in this application may be classified into an inherent computing resource and an available computing resource.

The inherent computing resource may include at least one of the following: a quantity of processors and specifications of the processors, a quantity of storages and specification of the storages, a quantity of memories and specifications of the memories, a quantity of network interface cards and specifications of the network interface cards, and the like. The processor may include one or a combination of a plurality of a central processing unit (central processing unit, CPU), a graphics processing unit (graphics processing unit, GPU), a neural network processing unit (neural network processing unit, NPU), a tensor processing unit (tensor processing Unit, TPU), a deep learning processing unit (deep learning processing unit, DPU), and the like. The storage may be one or a combination of a plurality of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like. The foregoing descriptions are some examples, and types of the processor and the storage are not limited in this application. Optionally, for a terminal device, the inherent computing resource may further include a version of an operating system in the terminal device. The version of the operating system is not limited in this application.

The available computing resource may be further classified into a currently available computing resource and a future available computing resource.

The currently available computing resource may be an average value, a maximum value, a minimum value, a total value, or a median of available computing resources in a current time period. For example, the currently available computing resource may include at least one of the following: an idle rate of a processor, an idle rate of a storage, and an idle rate of a memory in the current time period. The idle rates of the processor, the storage, and the memory may be respectively idle rates of each processor, each storage, and each memory in a device (for example, a terminal device or an NCCF network element) mentioned in this application. Optionally, for the NCCF network element, the currently available computing resource may further include a quantity of connections, a quantity of users, and the like at a protocol layer in the current time period.

The current time period may be a predefined or preconfigured time period, for example, 1 minute, 5 minutes, or 10 minutes. A length of the current time period is not limited in this application.

Different protocol layers may have different connections, for example, an application layer connection and a transport layer connection. Therefore, the quantity of connections may include at least one of the following: a quantity of TCP connections, a quantity of UDP connections, a quantity of HTTP connections, a quantity of session initiation protocol (session initiation protocol, SIP) connections, and the like. The quantity of UDP connections may include a quantity of QUIC connections.

The quantity of users may be a quantity of terminal devices connected to the NCCF network element, or the like.

Optionally, the currently available computing resource may be determined based on the inherent computing resource and a currently used computing resource, for example, a difference between the inherent computing resource and the currently used computing resource. The currently used computing resource may include at least one of the following: usage of a processor, usage of a storage, usage of a memory, and the like in the current time period.

The future available computing resource may be an average value, a maximum value, a minimum value, a total value, or a median of available computing resources in a future time period. For example, the future available computing resource may include at least one of the following: an idle rate of a processor, an idle rate of a storage, and an idle rate of a memory in the future time period. The idle rates of the processor, the storage, and the memory may be respectively idle rates of each processor, each storage, and each memory in a device (for example, a terminal device or an NCCF network element) mentioned in this application. Optionally, for the NCCF network element, the future available computing resource may further include a quantity of connections, a quantity of users, and the like of an application layer session in the future time period.

The future time period may be a predefined or preconfigured time period, for example, 1 minute, 5 minutes, or 10 minutes. A length of the future time period is not limited in this application. Optionally, a start moment of the future time period is later than an end moment of the current time period.

Optionally, the future available computing resource may be determined based on the currently available computing resource, or may be determined in another manner. A specific process is not limited herein.

Generally, in a computer system, memory needs to be allocated for an application program. Because memory resources are limited, when too many application programs are started, insufficient memory may be caused, which may cause abnormal running of the application programs, affecting user experience. In view of this, this application provides a communication method, to resolve this problem.

The following describes embodiments of this application in detail. Specifically, a terminal device, a computing network converged node (which may also be referred to as a user plane gateway), a first network element, a second network element, and a server below may be respectively the terminal device, the NCCF network element, the PCF network element, the CMF network element, and the AF network element in FIG. 1 and FIG. 2. It should be noted that names of messages between network elements, names of parameters in the messages, and the like in the following embodiments are merely examples, and there may be other names during specific implementation. This is not specifically limited in embodiments of this application.

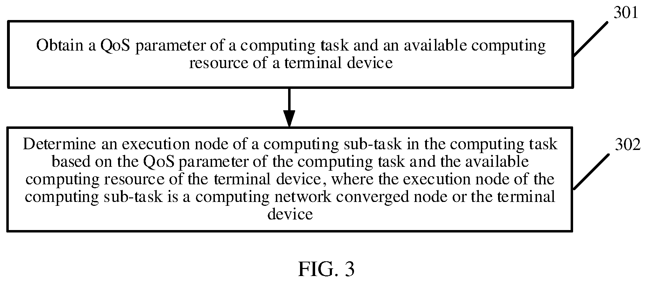

FIG. 3 shows a communication method according to an embodiment of this application. The communication method includes but is not limited to the following steps.

301: A terminal device obtains a QoS parameter of a computing task and an available computing resource of the terminal device.

Optionally, the terminal device may receive the QoS parameter of the computing task from a server.

The available computing resource of the terminal device may be a currently available computing resource and/or a future available computing resource.

302: The terminal device determines an execution node of a computing sub-task in the computing task based on the QoS parameter of the computing task and the available computing resource of the terminal device, where the execution node of the computing sub-task is a computing network converged node or the terminal device.

Optionally, there is an association relationship between the computing sub-task and another computing sub-task in the computing task, and step 302 may include: The terminal device determines the execution node of the computing sub-task based on the association relationship, the QoS parameter of the computing task, and the available computing resource of the terminal device. The another computing sub-task is one or more computing sub-tasks other than the computing sub-task in the computing task. For example, it is assumed that a specific computing task includes four computing sub-tasks: a computing sub-task 1 to a computing sub-task 4. There is a strong dependency relationship between the computing sub-task 1 and the computing sub-task 2, and there is a strong dependency relationship between the computing sub-task 3 and the computing sub-task 4. When the terminal device locally executes the computing sub-task 1, because there is the strong dependency relationship between the computing sub-task 1 and the computing sub-task 2, the terminal device may locally execute the computing sub-task 2. Similarly, when the terminal device executes the computing sub-task 3 on the computing network converged node, because there is the strong dependency relationship between the computing sub-task 3 and the computing sub-task 4, the terminal device may execute the computing sub-task 4 on the computing network converged node.

Optionally, the terminal device may further determine the execution node of the computing sub-task based on running requirement information of the computing sub-task. The running requirement information of the computing sub-task includes a resource requirement of the computing sub-task and/or a running environment of the computing sub-task. The resource requirement of the computing sub-task includes at least one of the following: a quantity of processors and specifications of the processors, a quantity of storages and specification of the storages, a quantity of memories and specifications of the memories, a quantity of network interface cards and specifications of the network interface cards, and the like. For example, it is assumed that a specific computing task includes two computing sub-tasks: a computing sub-task 1 and a computing sub-task 2. For example, a memory size required by the computing sub-task 1 is less than a memory size required by the computing sub-task 2. Therefore, the terminal device may determine an execution node of the computing sub-task 2 as a local node, and determine an execution node of the computing sub-task 1 as a computing network converged node. Generally, if a computing sub-task has a low resource requirement, it may also be considered that a computation amount of the computing sub-task is small, that is, computation complexity is small. This also means that the terminal device may locally execute a computing sub-task with a small computation amount, and execute a computing sub-task with a large computation amount on the computing network converged node.

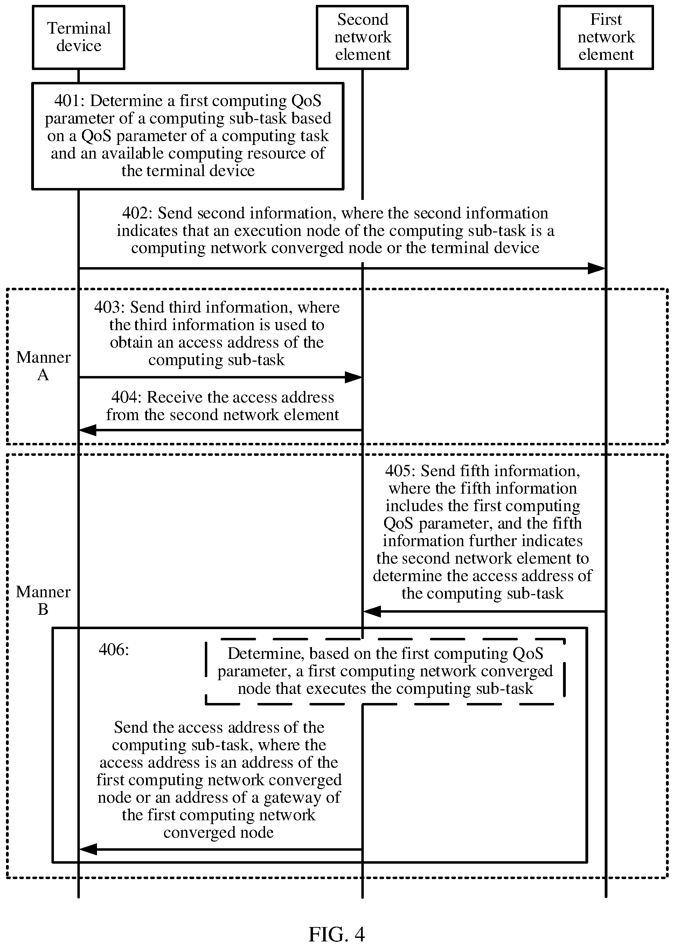

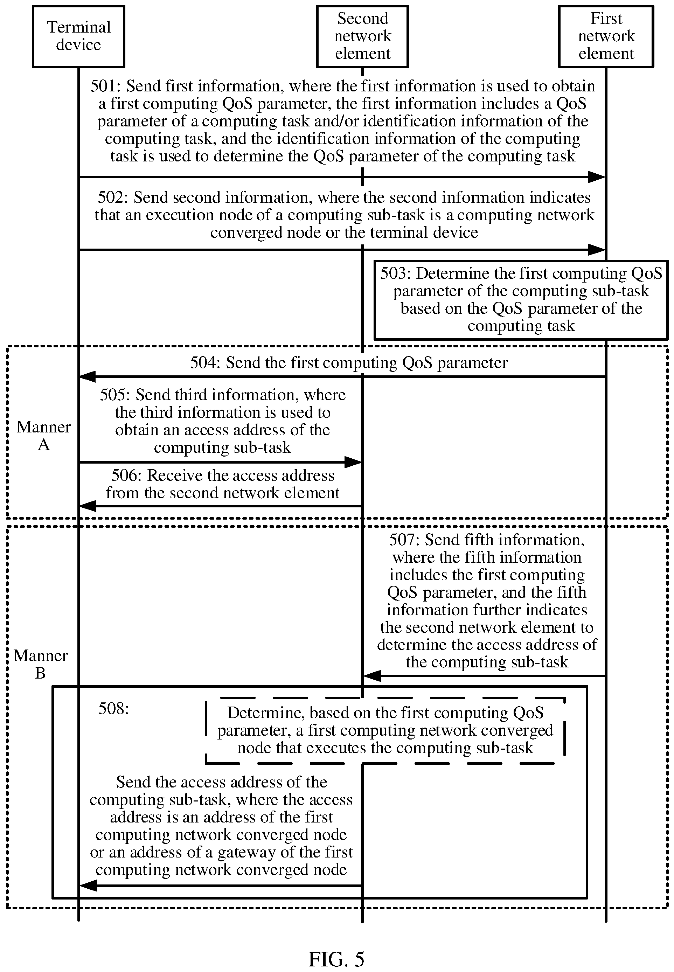

Optionally, when the terminal device learns of a computing QoS parameter (for example, a first computing QoS parameter in FIG. 4, or a first computing QoS parameter or a second computing QoS parameter in FIG. 5) of the computing sub-task, the terminal device may further determine the execution node of the computing sub-task based on the computing QoS parameter. For example, it is assumed that a specific computing task includes two computing sub-tasks: a computing sub-task 1 and a computing sub-task 2. For example, a delay of the computing sub-task 1 is less than a delay of the computing sub-task 2. Therefore, the terminal device may determine an execution node of the computing sub-task 2 as a local node, and determine an execution node of the computing sub-task 1 as a computing network converged node.

Optionally, there may be one or more computing sub-tasks in the computing task, and execution nodes of different computing sub-tasks may be all the same, partially the same, or all different.

In addition, the computing network converged node in step 302 may be any computing network converged node in general, that is, a specific computing network converged node is not limited.

It can be learned that, in the foregoing embodiment, the terminal device may autonomously determine the execution node of the computing sub-task in the computing task. This is equivalent to that the terminal device divides the computing task and determines an execution node of the computing task. In this way, when memory resources are limited, a computing sub-task in the computing task may be executed on a corresponding execution node. This ensures that the computing task can be successfully executed, that is, ensures normal running of an application program, thereby improving user experience. In addition, the execution node of the computing sub-task in the computing task is determined based on the QoS parameter of the computing task and the available computing resource of the terminal device. This can provide QoS guarantee for the computing sub-task. For example, an end-to-end service delay is reduced, and end-to-end delay stability is improved.

This application further provides an embodiment shown in FIG. 4. The embodiment shown in FIG. 4 may be combined with the embodiment shown in FIG. 3. For example, based on the embodiment shown in FIG. 3, the following steps are further included.

401: The terminal device determines a first computing QoS parameter of the computing sub-task based on the QoS parameter of the computing task and the available computing resource of the terminal device.

For example, the terminal device may determine the first computing QoS parameter based on the association relationship between the computing sub-task and the another computing sub-task in the computing task, the QoS parameter of the computing task, and the available computing resource of the terminal device.

Optionally, the terminal device may determine a proportion of the computing sub-task in the QoS parameter based on the association relationship between the computing sub-task and the another computing sub-task in the computing task, the QoS parameter of the computing task, and the available computing resource of the terminal device, and therefore may determine the first computing QoS parameter based on the proportion and the QoS parameter of the computing task. For example, the proportion of the computing sub-task in the QoS parameter is 30%, the QoS parameter of the computing task includes a delay, and the delay is 120 milliseconds (ms). Therefore, a delay in the first computing QoS parameter may be 120*30%, that is, 36 ms.

It should be noted that, after determining the first computing QoS parameter, the terminal device may request to guarantee a corresponding computing resource from an operating system of the terminal device based on the first computing QoS parameter. For example, a computing resource management function module or a computing resource management function layer may be defined in the operating system, and the computing resource management function module or the computing resource management function layer guarantees, based on a requested computing resource, the computing resource through reservation or preemption.

402: The terminal device sends second information to a first network element, where the second information indicates that the execution node of the computing sub-task is the computing network converged node or the terminal device.

Correspondingly, the first network element receives the second information from the terminal device.

Optionally, the second information may further include at least one of the following: identification information of the computing task and identification information of the computing sub-task.

The terminal device may send the second information to the first network element in the following several manners. Details are as follows:
(1) The terminal device may send the second information to the first network element by using an AMF network element. For example, the second information may be carried in a non-access stratum (non-access stratum, NAS) message and sent to the first network element by using the AMF network element. In other words, it is understood that there is a NAS reference point between the terminal device and the first network element. The NAS message may be sent before a session of the terminal device is established, sent in a process of establishing or modifying the session, sent in a registration process, sent after registration is completed, or the like. This is not limited in this application. Optionally, the NAS message may be referred to as a computing NAS message. A name of the NAS message is not limited in this application. Optionally, the NAS message may be carried in a session request message.
(2) The terminal device may send the second information to the first network element by using a second network element. For example, the second information may be carried in a message implemented based on a protocol (such as NAS, TCP, UDP, or IP) between the terminal device and the second network element, for example, a NAS message, and then is sent by the second network element to the first network element. In this case, there may be a NAS reference point between the terminal device and the second network element, and a NAS reference point between the terminal device and the first network element is optional. For example, the second information may be carried in a container (container) of the NAS message, and the second network element further sends the container to the first network element. For example, the container may be a part of a session management container (SM container), or the container is an independent container, and may be referred to as a computing management container. For another example, the second network element receives the container including the second information, and then includes the second information in a protocol corresponding to a reference point between the second network element and the first network element and sends the protocol to the first network element.
(3) The first network element has a function similar to that of an AF network element. The terminal device and the first network element have a protocol reference point (reference point) based on a user plane. In other words, the second information may be carried in an application layer message, for example, an HTTP message, a SIP message, or a real-time transport protocol (real-time transport protocol, RTP) message. In this case, a transmission path of the application layer message is: terminal device -> transmission network (which may include radio access network device -> computing network converged node) -> first network element.

It should be noted that, in this application, for a data transmission process between the terminal device and the first network element, refer to any one of Manner (1) to Manner (3) above. Certainly, there may be another manner. This is not limited herein.

Optionally, in the embodiment shown in FIG. 4, the second information may further include the first computing QoS parameter. The method further includes: The terminal device receives fourth information from the first network element. The fourth information may be implemented in the following several manners. Details are as follows:
1. The fourth information indicates that the first computing QoS parameter is allowed to be used.
2. The fourth information indicates that the first computing QoS parameter is not allowed to be used. In this case, the fourth information further indicates a second computing QoS parameter of the computing sub-task. For a manner in which the first network element determines the second computing QoS parameter, refer to a process in which the first network element determines the first computing QoS parameter. Details are not described herein again.
3. The fourth information indicates a second computing QoS parameter. In this case, the terminal device may indicate, to the first network element, that the first computing QoS parameter is allowed to be modified; or a protocol predefines that the first computing QoS parameter is allowed to be modified, that is, the first computing QoS parameter may be modified by default.

It should be noted that, for Manner 1 above, after obtaining the first computing QoS parameter, the terminal device may request to guarantee a corresponding computing resource from the operating system of the terminal device based on the first computing QoS parameter. For example, a computing resource management function module or a computing resource management function layer may be defined in the operating system, and the computing resource management function module or the computing resource management function layer guarantees, based on a requested computing resource, the computing resource through reservation or preemption. For Manner 2 or Manner 3 above, the first computing QoS parameter in step 504 to step 508 may be replaced with the second computing QoS parameter. In this case, after obtaining the second computing QoS parameter, the terminal device may request to guarantee a corresponding computing resource from the operating system of the terminal device based on the second computing QoS parameter. For example, a computing resource management function module or a computing resource management function layer may be defined in the operating system, and the computing resource management function module or the computing resource management function layer guarantees, based on a requested computing resource, the computing resource through reservation or preemption.

When the second information indicates that the execution node of the computing sub-task is the computing network converged node, after step 402, step 403 and step 404 may be further performed; or after step 402, step 405 and step 406 may be further performed. For ease of differentiation, step 403 and step 404 may be used as an implementation, for example, Manner A; and step 405 and step 406 may be used as another implementation, for example, Manner B.

### Manner A

403: The terminal device sends third information to the second network element, where the third information is used to obtain an access address of the computing sub-task, and the access address is an address of a first computing network converged node or an address of a gateway of the first computing network converged node.

Correspondingly, the second network element receives the third information from the terminal device.

The address of the first computing network converged node may be an internet protocol address (internet protocol address), or the address of the first computing network converged node may be an IP address and a port number. Similarly, the address of the gateway of the first computing network converged node may be an IP address, or the address of the gateway of the first computing network converged node may be an IP address and a port number.

Optionally, the third information may further include at least one of the following: the identification information of the computing sub-task and the first computing QoS parameter of the computing sub-task. Optionally, the third information may further include indication information and/or the identification information of the computing task, and the indication information indicates that the computing sub-task is executed on the computing network converged node.

For example, assuming that the third information carries the first computing QoS parameter, the second network element may determine the first computing network converged node based on the first computing QoS parameter. The first computing network converged node mentioned in this application may be a computing network converged node that will execute the computing sub-task in the future, that is, a specific computing network converged node is limited. It may be understood that, when the second network element specifies a specific first computing network converged node, the first computing network converged node may already exist, or the first network element may dynamically instantiate the first computing network converged node by using a virtualization technology.

For another example, assuming that the third information carries the identification information of the computing sub-task, the second network element may query the first network element for the first computing QoS parameter corresponding to the identification information of the computing sub-task. In this way, the second network element may determine the first computing network converged node based on the first computing QoS parameter.

Optionally, the third information may be carried, for example, in a session message, and the session message may be, for example, a session establishment request message or a session modification request message.

404: The terminal device receives the access address from the second network element.

Correspondingly, the second network element sends the access address to the terminal device. In this way, the terminal device may obtain an execution result of the computing sub-task by using the access address. For example, after obtaining the access address, the terminal device may initiate invoking of the computing sub-task to the access address. When the access address is the address of the first computing network converged node, the first computing network converged node processes invoking of the computing sub-task, and feeds back the execution result to the terminal device. When the access address is the address of the gateway of the first computing network converged node, the gateway of the first computing network converged node receives an invoking message of the computing sub-task, and the gateway of the first computing network converged node sends the invoking message to the first computing network converged node, so that the first computing network converged node executes invoking of the computing sub-task, and feeds back the execution result to the terminal device.

Optionally, the access address may be carried in a session message, and the session message may be, for example, a session establishment accept message, a session modification accept message, a computing session establishment accept message, or a computing session modification accept message.

### Manner B

405: The first network element sends fifth information to the second network element, where the fifth information includes the first computing QoS parameter of the computing sub-task, and the fifth information further indicates the second network element to determine an access address of the computing sub-task.

Correspondingly, the second network element receives the fifth information from the first network element. When receiving the first computing QoS parameter, the second network element considers by default that the execution node of the computing sub-task is the computing network converged node, unless the first network element explicitly indicates that the execution node of the computing sub-task is the terminal device.

Optionally, the fifth information further includes the identification information of the computing sub-task and/or the identification information of the computing task.

In a possible implementation, that the fifth information includes the first computing QoS parameter of the computing sub-task in step 405 may be replaced with that the fifth information includes the identification information of the computing sub-task. In this case, the fifth information may further include the first computing QoS parameter and/or the identification information of the computing task.

406: The second network element determines, based on the first computing QoS parameter, a first computing network converged node that executes the computing sub-task, and sends the access address of the computing sub-task to the terminal device, where the access address is an address of the first computing network converged node or an address of a gateway of the first computing network converged node.

Correspondingly, the terminal device receives the access address from the second network element. In this way, the terminal device may obtain an execution result of the computing sub-task by using the access address. For example, after obtaining the access address, the terminal device may initiate invoking of the computing sub-task to the access address. When the access address is the address of the first computing network converged node, the first computing network converged node processes invoking of the computing sub-task, and feeds back the execution result to the terminal device. When the access address is the address of the gateway of the first computing network converged node, the gateway of the first computing network converged node receives an invoking message of the computing sub-task, and the gateway of the first computing network converged node sends the invoking message to the first computing network converged node, so that the first computing network converged node executes invoking of the computing sub-task, and feeds back the execution result to the terminal device.

Optionally, when that the fifth information includes the first computing QoS parameter of the computing sub-task in step 405 is replaced with that the fifth information includes the identification information of the computing sub-task, the second network element may query the first network element for the first computing QoS parameter corresponding to the identification information of the computing sub-task. In this way, the second network element may determine the first computing network converged node based on the first computing QoS parameter.

Optionally, the second network element may further send the identification information of the computing sub-task and/or the identification information of the computing task to the terminal device. For example, the first network element may simultaneously send the access address in step 406 and the identification information of the computing sub-task and/or the identification information of the computing task to the terminal device.

It can be learned that, in the foregoing embodiment, the terminal device may autonomously determine a computing QoS parameter of the computing sub-task based on a computing resource status of the terminal device, so that a complex interaction process of negotiation with a network and reporting of a computing resource of the terminal device can be reduced, and signaling exchange is reduced. The terminal device may further enable, by using the second information, the first network element to know where the computing sub-task in the computing task is executed. For a case in which the computing sub-task is executed on the computing network converged node, the terminal device may further learn of the access address of the computing sub-task, and then may obtain the execution result of the computing sub-task by using the access address. In this way, when memory resources are limited, the execution result of the computing sub-task can still be obtained. This can ensure that the computing task is successfully executed, that is, ensure normal running of an application program, thereby improving user experience.

Optionally, step 401 in the embodiment in FIG. 4 may be performed before or after step 302 in FIG. 3. Step 402 to step 404 in the embodiment in FIG. 4 are performed after step 302 in FIG. 3. Step 405 and step 406 in the embodiment in FIG. 4 are performed after step 302 in FIG. 3.

Optionally, an execution body of step 301 and step 302 in FIG. 3 may be replaced with the server. In this case, an execution body of step 401 and step 402 may also be replaced with the server.

This application further provides an embodiment shown in FIG. 5. The embodiment shown in FIG. 5 may be combined with the embodiment shown in FIG. 3. For example, based on the embodiment shown in FIG. 3, the following steps are further included.

501: The terminal device sends first information to a first network element, where the first information is used to obtain a first computing QoS parameter, the first information includes the QoS parameter of the computing task and/or identification information of the computing task, and the identification information of the computing task is used to determine the QoS parameter of the computing task.

Correspondingly, the first network element receives the first information from the terminal device. That the identification information of the computing task is used to determine the QoS parameter of the computing task may be understood as that the first network element obtains the QoS parameter of the computing task based on the identification information of the computing task. For example, the first network element associatively stores an association relationship between the identification information of the computing task and the QoS parameter of the computing task, and therefore may obtain the QoS parameter of the computing task based on the identification information of the computing task and the association relationship. Alternatively, the first network element obtains the QoS parameter of the computing task from a computing task repository function network element based on the identification information of the computing task.

Optionally, the computing task repository function network element and the first network element may be a same network element, or the computing task repository function network element may be an independent network element.

Optionally, the computing task repository function network element may further store at least one of the following: identification information of the computing sub-task, the association relationship between the computing sub-task and the another computing sub-task in the computing task, the running requirement information of the computing sub-task in the computing task, a candidate execution node of the computing sub-task, and the like. This is equivalent to that the computing task repository function network element associatively stores the identification information of the computing task, the identification information of the computing sub-task, the QoS parameter of the computing task, the association relationship between the computing sub-task and the another computing sub-task in the computing task, the running requirement information of the computing sub-task in the computing task, and the candidate execution node of the computing sub-task. Therefore, the first network element may obtain corresponding information based on the identification information of the computing task or the identification information of the computing sub-task.

For the running requirement information of the computing sub-task, refer to related descriptions of step 302 in FIG. 3. Details are not described herein again. The candidate execution node of the computing sub-task may include at least one computing network converged node and/or the terminal device. Optionally, the computing task repository function network element may obtain at least one of the identification information of the computing task, the association relationship between the computing sub-task and the another computing sub-task in the computing task, the running requirement information of the computing sub-task in the computing task, the candidate execution node of the computing sub-task, and the like from the terminal device.

Optionally, the first information may further include the identification information of the computing sub-task.

502: The terminal device sends second information to the first network element, where the second information indicates that the execution node of the computing sub-task is the computing network converged node or the terminal device.

Correspondingly, the first network element receives the second information from the terminal device.

Optionally, the second information and the first information may be carried in a same message or different messages. The message herein may be a NAS message, an application layer message, or the like. For details, refer to the descriptions of step 402 in FIG. 4.

It should be noted that there is no necessary sequence of performing step 501 and step 502. For example, step 502 may be performed before or after step 501, or step 501 and step 502 may be simultaneously performed. When step 501 and step 502 are simultaneously performed, it may be considered that the first information and the second information are carried in a same message, for example, in a same NAS message or a same application layer message. In this case, the terminal device sends the first information and the second information to the first network element at a time, for example, a union set of content included in the first information and the second information. For example, it is assumed that the first information includes the QoS parameter of the computing task and the identification information of the computing task, and the second information includes the identification information of the computing task and the identification information of the computing sub-task. In this case, the terminal device may send the QoS parameter of the computing task, the identification information of the computing task, and the identification information of the computing sub-task to the terminal device.

503: The first network element determines the first computing QoS parameter of the computing sub-task based on the QoS parameter of the computing task.

Optionally, the first network element may further determine the first computing QoS parameter based on the available computing resource (for example, the currently available computing resource and/or the future available computing resource) of the terminal device. In this case, the first network element may further learn of the available computing resource of the terminal device in the following manners. Details are as follows:

1. The first network element receives the available computing resource from the terminal device. The available computing resource of the terminal device may be carried in a same message or different messages with at least one of the first information and the second information. These messages may be NAS messages, application layer messages, or the like.

2. The first network element receives an inherent computing resource and a currently used computing resource from the terminal device. In this way, the first network element may determine the currently available computing resource based on the inherent computing resource of the terminal device and the currently used computing resource. Optionally, the first network element may further determine the future available computing resource based on the currently available computing resource. At least one of the inherent computing resource of the terminal device and the currently used computing resource may be carried in a same message or different messages with at least one of the first information and the second information. These messages may be NAS messages, application layer messages, or the like.

It should be noted that Manner 1 or Manner 2 above may be periodically performed, and is an example in which the first network element learns of the available computing resource of the terminal device. There may be other implementations, which are not listed one by one herein.

Optionally, the first network element may further determine the first computing QoS parameter based on the association relationship between the computing sub-task and the another computing sub-task in the computing task. In this case, the first network element may further receive the association relationship from the terminal device. For example, for Manner 1 above, the association relationship may be carried in a same message or different messages with at least one of the available computing resource of the terminal device, the first information, and the second information. These messages may be NAS messages, application layer messages, or the like. For Manner 2 above, the association relationship may be carried in a same message or different messages with at least one of the inherent computing resource of the terminal device, the currently used computing resource, the first information, and the second information. These messages may be NAS messages, application layer messages, or the like.

Optionally, the first network element may further determine the first computing QoS parameter based on an available computing resource (for example, a currently available computing resource and/or a future available computing resource) of at least one computing network converged node (which already exists or currently does not exist but can be allocated through instantiation). For a manner in which the first network element obtains the available computing resource of the at least one computing network converged node, refer to Manner 1 or Manner 2. A difference lies in that the first network element obtains a corresponding available computing resource from at least a first computing network converged node or a computing resource management system of the computing network converged node. Details are not described herein again. The at least one computing network converged node includes the first computing network converged node.

It should be noted that there is no necessary sequence of performing step 502 and step 503. For example, step 502 may be performed before step 503, or step 502 and step 503 may be simultaneously performed. When step 501 and step 502 are simultaneously performed, step 503 is performed after step 502.

After step 503, step 504 to step 506 may be further performed; or step 507 and step 508 may be further performed. For ease of differentiation, step 504 to step 506 may be used as an implementation, for example, Manner A; and step 507 and step 508 may be used as another implementation, for example, Manner B.

### Manner A

504: The first network element sends the first computing QoS parameter to the terminal device.

Correspondingly, the terminal device receives the first computing QoS parameter from the first network element.

Optionally, the first network element may further send the identification information of the computing sub-task and/or the identification information of the computing task to the terminal device. For example, the first network element may simultaneously send the first computing QoS parameter in step 504 and the identification information of the computing sub-task and/or the identification information of the computing task to the terminal device.

When the second information indicates that the execution node of the computing sub-task is the computing network converged node, step 505 may be further performed after step 504.

505: The terminal device sends third information to a second network element, where the third information is used to obtain an access address of the computing sub-task, and the access address is an address of the first computing network converged node or an address of a gateway of the first computing network converged node.

Correspondingly, the second network element receives the third information from the terminal device.

For step 505, refer to related descriptions of step 403 in FIG. 4. Details are not described herein again.

506: The terminal device receives the access address from the second network element.

Correspondingly, the second network element sends the access address to the terminal device. In this way, the terminal device may obtain an execution result of the computing sub-task by using the access address.

For step 506, refer to related descriptions of step 404 in FIG. 4. Details are not described herein again.

### Manner B

507: The first network element sends fifth information to a second network element, where the fifth information includes the first computing QoS parameter, and the fifth information further indicates the second network element to determine an access address of the computing sub-task.

Correspondingly, the second network element receives the fifth information from the first network element.

For step 507, refer to related descriptions of step 405 in FIG. 4. Details are not described herein again.

508: The second network element determines, based on the first computing QoS parameter, a first computing network converged node that executes the computing sub-task, and sends the access address of the computing sub-task to the terminal device, where the access address is an address of the first computing network converged node or an address of a gateway of the first computing network converged node.

Correspondingly, the terminal device receives the access address from the second network element.

Step 508 is similar to step 406 in FIG. 4. Details are not described herein again.

It can be learned that, in the foregoing embodiment, the terminal device may further enable, by using the second information, the first network element to know where the computing sub-task in the computing task is executed. For a case in which the computing sub-task is executed on the computing network converged node, the terminal device may further learn of the access address of the computing sub-task, and then may obtain the execution result of the computing sub-task by using the access address. In this way, when memory resources are limited, the execution result of the computing sub-task can still be obtained. This can ensure that the computing task is successfully executed, that is, ensure normal running of an application program, thereby improving user experience.

Optionally, the embodiment in FIG. 5 may be performed after step 302 in FIG. 3.

Optionally, an execution body of step 301 and step 302 in FIG. 3 may be replaced with the server. In this case, an execution body of step 501, step 502, and step 504 to step 506 may also be replaced with the server. After step 506 is replaced with that the server receives the access address from the second network element, the server may further send the access address to the terminal device.

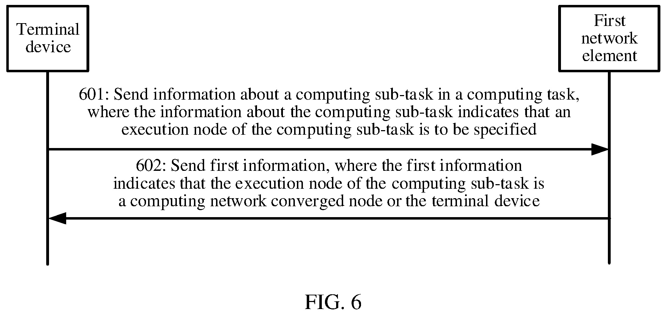

FIG. 6 shows another communication method according to an embodiment of this application. The communication method includes but is not limited to the following steps.

601: A terminal device sends information about a computing sub-task in a computing task to a first network element, where the information about the computing sub-task indicates that an execution node of the computing sub-task is to be specified.

Correspondingly, the first network element receives the information about the computing sub-task from the terminal device.

For a manner in which the terminal device sends the information about the computing sub-task to the first network element, refer to a process in which the terminal device sends the second information to the first network element in FIG. 4. Details are not described herein again.

Optionally, that the information about the computing sub-task indicates that the execution node of the computing sub-task is to be specified may be understood as that the information about the computing sub-task is used to request to allocate the execution node of the computing sub-task. Optionally, there may be one or more computing sub-tasks in the computing task, and execution nodes of different computing sub-tasks may be all the same, partially the same, or all different.

In a possible implementation, the information about the computing sub-task may include at least one of the following: identification information of the computing task, identification information of the computing sub-task, and a QoS parameter of the computing task.

For example, the information about the computing sub-task may include the identification information of the computing task. After obtaining the information about the computing sub-task, the first network element may obtain, from a computing task repository function network element based on the identification information of the computing task, specific information for determining an execution node of the computing sub-task, for example, the QoS parameter of the computing task, the identification information of the computing sub-task, and running requirement information of the computing sub-task.

For another example, the information about the computing sub-task may include the identification information of the computing task and the identification information of the computing sub-task. After obtaining the information about the computing sub-task, the first network element may obtain, from a computing task repository function network element based on the identification information of the computing task and/or the identification information of the computing sub-task, specific information for determining an execution point of the computing sub-task, for example, the QoS parameter of the computing task and running requirement information of the computing sub-task.

For another example, the information about the computing sub-task may include the identification information of the computing task, the identification information of the computing sub-task, and the QoS parameter of the computing task. After obtaining the information about the computing sub-task, the first network element may obtain, from a computing task repository function network element based on the identification information of the computing task and/or the identification information of the computing sub-task, specific information for determining an execution point of the computing sub-task, for example, running requirement information of the computing sub-task.

It should be noted that the foregoing is merely some examples, and other combination manners may alternatively be used, which are not listed one by one herein. In addition, for the computing task repository function network element, refer to related descriptions of step 501 in FIG. 5. Details are not described herein again.

Optionally, the method may further include: The terminal device obtains the QoS parameter of the computing task and an available computing resource of the terminal device; and the terminal device generates the information about the computing sub-task based on the QoS parameter of the computing task and the available computing resource of the terminal device.

That the terminal device obtains the QoS parameter of the computing task may include: The terminal device receives the QoS parameter of the computing task from a server. The available computing resource of the terminal device may be a currently available computing resource and/or a future available computing resource.

Optionally, the terminal device may further generate the information about the computing sub-task based on an association relationship between the computing sub-task and another computing sub-task in the computing task. The another computing sub-task is one or more computing sub-tasks other than the computing sub-task in the computing task.

602: The first network element sends first information to the terminal device, where the first information indicates that the execution node of the computing sub-task is a computing network converged node or the terminal device.

Correspondingly, the terminal device sends the first information to the first network element.

The computing network converged node in step 602 may be any computing network converged node in general, that is, a specific computing network converged node is not limited.

Optionally, before step 602, the first network element may further determine the execution node of the computing sub-task. For example, the first network element may determine the execution node of the computing sub-task based on at least one of a computing resource of the terminal device, a computing resource of at least one computing network converged node, transmission status information between the terminal device and the first network element, and the like.

For example, it is assumed that the computing task includes a computing sub-task X and a computing sub-task Y. The first network element determines, based on the computing resource of the terminal device, the computing resource of the at least one computing network converged node, and the transmission status information between the terminal device and the first network element in a principle of a minimum computing task completion time, to execute both the computing sub-task X and the computing sub-task Y on the computing network converged node.

For another example, it is assumed that one computing task includes a computing sub-task X and a computing sub-task Y, and another computing task includes a computing sub-task Z and a computing sub-task Q. An available computing resource of the computing network converged node may be used for running the computing sub-task Y, or may be used for running the computing sub-task Z and the computing sub-task Q. According to a principle of optimal overall system capacity, the first network element executes the computing sub-task Y on the terminal device, and executes the computing sub-task Z and the computing sub-task Q on the computing network converged node.

Optionally, the first network element may receive the computing resource of the terminal device and the transmission status information between the terminal device and the first network element from the terminal device, and may further receive the computing resource of the at least one computing network converged node from the at least one computing network converged node.

The computing resource of the terminal device may include an inherent computing resource and the available computing resource of the terminal device. The computing resource of the computing network converged node may include an inherent computing resource and the available computing resource of the computing network converged node, and the available computing resource of the computing network converged node may be a currently available computing resource and/or a future available computing resource. The transmission status information between the terminal device and the first network element may include transmission quality and/or a transmission delay between the terminal device and the first network element, and the like. Optionally, the first network element may further determine the execution node of the computing sub-task based on the association relationship between the computing sub-task and the another computing sub-task.

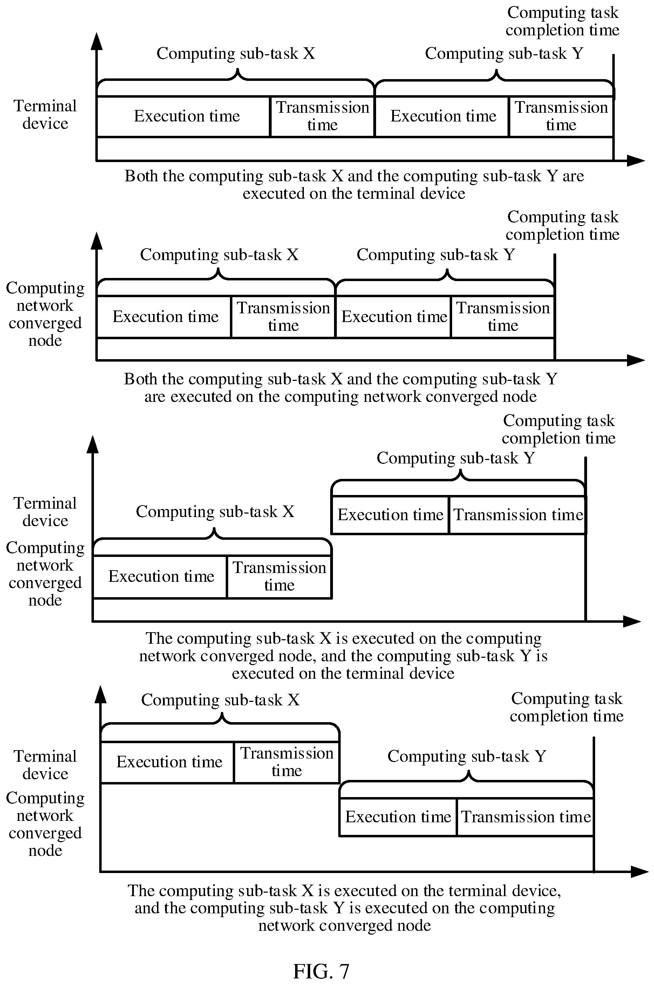

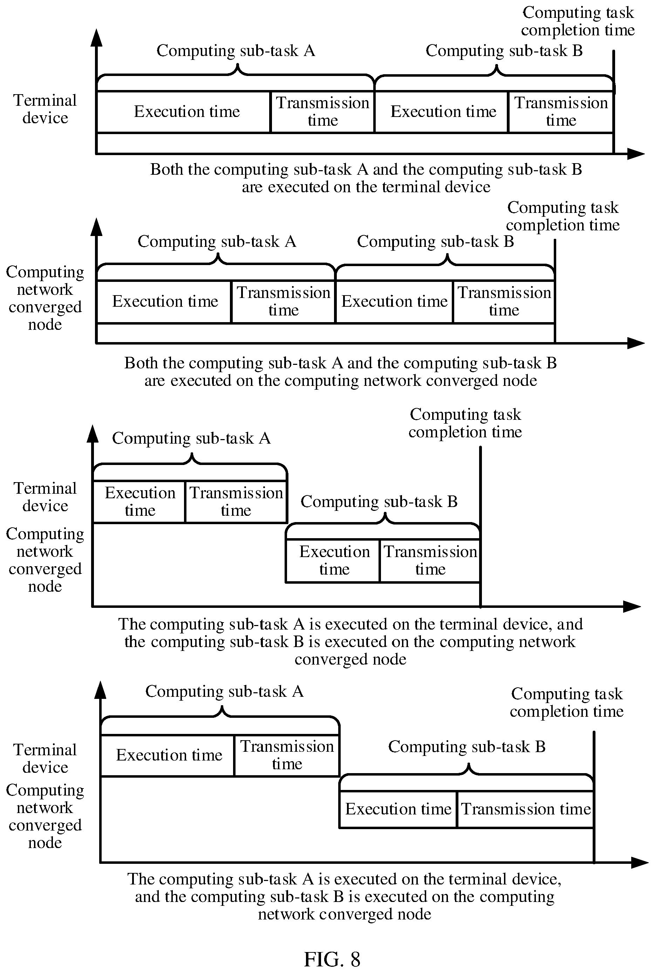

For example, it is assumed that the computing task includes a computing sub-task X and a computing sub-task Y, and there is a strong dependency relationship between the computing sub-task X and the computing sub-task Y. In this case, the first network element may execute both the computing sub-task X and the computing sub-task Y on the terminal device, or may execute both the computing sub-task X and the computing sub-task Y on the computing network converged node. As shown in FIG. 7, in a case in which there is the strong dependency relationship between the computing sub-task X and the computing sub-task Y, when both the computing sub-task X and the computing sub-task Y are executed on the computing network converged node, a computing task completion time is the shortest compared with that in another case. Therefore, the first network element executes both the computing sub-task X and the computing sub-task Y on the computing network converged node. It is assumed that the computing task further includes a computing sub-task A and a computing sub-task B, and there is no association relationship between the computing sub-task A and the computing sub-task B. As shown in FIG. 8, when the computing sub-task A and the computing sub-task B are respectively executed on the terminal device and the computing network converged node, a computing task completion time is the shortest compared with that in another case. Therefore, the first network element respectively executes the computing sub-task A and the computing sub-task B on the terminal device and the computing network converged node.

It should be noted that an execution time and a transmission time in FIG. 7 or FIG. 8 are respectively a time of executing a specific computing sub-task and a time of transmitting an execution result of the computing sub-task to a corresponding device. For example, the computing sub-task is executed on the terminal device, but an input of another computing sub-task is the execution result of the computing sub-task. Therefore, the execution result of the computing sub-task may need to be transmitted to an execution node (for example, the computing network converged node) of the another computing sub-task. A time consumed in this process may be referred to as a transmission time. For another example, the computing sub-task is executed on the computing network converged node, but an input of another computing sub-task is the execution result of the computing sub-task. Therefore, the execution result of the computing sub-task may need to be transmitted to an execution node (for example, the terminal device) of the another computing sub-task. A time consumed in this process may be referred to as a transmission time.

Optionally, the information about the computing sub-task further indicates an execution node of the computing sub-task that is expected by the terminal device. The terminal device expects the execution node of the computing sub-task to be the terminal device, and the first information may indicate that the execution node of the computing sub-task is the computing network converged node. The terminal device expects the execution node of the computing sub-task to be the computing network converged node, and the first information may indicate that the execution node of the computing sub-task is the terminal device. This may be considered that the first network element modifies the execution node of the computing sub-task.

It can be learned that, in the foregoing embodiment, the terminal device may send the information about the computing sub-task in the computing task to the first network element, so that the first network element can learn that the execution node of the computing sub-task is to be specified, to indicate the execution node of the computing sub-task to the terminal device. In this way, when memory resources are limited, it may be ensured that a computing sub-task in the computing task may be executed on a corresponding execution node. This ensures that the computing task can be successfully executed, that is, ensures normal running of an application program, thereby improving user experience.

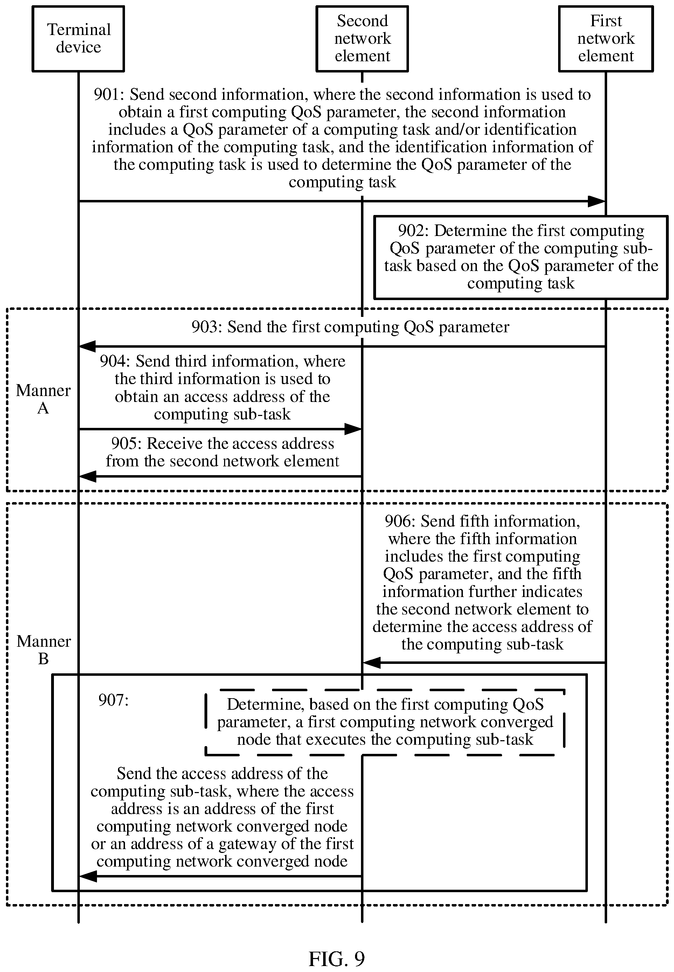

This application further provides an embodiment shown in FIG. 9. The embodiment shown in FIG. 9 may be combined with the embodiment shown in FIG. 6. For example, based on the embodiment shown in FIG. 6, the following steps are further included.

901: The terminal device sends second information to the first network element, where the second information is used to request to obtain a first computing QoS parameter, the second information includes the QoS parameter of the computing task and/or the identification information of the computing task, and the identification information of the computing task is used to determine the QoS parameter of the computing task.

Correspondingly, the first network element receives the second information from the terminal device. That the identification information of the computing task is used to determine the QoS parameter of the computing task may be understood as that the first network element obtains the QoS parameter of the computing task based on the identification information of the computing task. For example, when the information about the computing sub-task in step 601 in FIG. 6 includes the identification information of the computing task and the QoS parameter of the computing task, the second information may include the identification information of the computing task. In other words, after receiving the information about the computing sub-task, the first network element associatively stores an association relationship between the identification information of the computing task and the QoS parameter of the computing task. Therefore, when receiving the second information, the first network element may obtain the QoS parameter of the computing task based on the identification information of the computing task and the association relationship. Alternatively, the terminal device sends the identification information of the computing task and the QoS parameter of the computing task to the computing task repository function network element, so that the computing task repository function network element associatively stores an association relationship between the identification information of the computing task and the QoS parameter of the computing task. Therefore, when the first network element receives the second information, the first network element may obtain the QoS parameter of the computing task from the computing task repository function network element based on the identification information of the computing task.

Optionally, the computing task repository function network element and the first network element may be a same network element, or the computing task repository function network element may be an independent network element.

Optionally, the computing task repository function network element may further receive the identification information of the computing sub-task, the association relationship between the computing sub-task and the another computing sub-task in the computing task, the running requirement information of the computing sub-task in the computing task, a candidate execution node of the computing sub-task, and the like from the terminal device, and therefore may further associatively store at least one of the following: the identification information of the computing task, the QoS parameter of the computing task, the identification information of the computing sub-task, the association relationship between the computing sub-task and the another computing sub-task in the computing task, the running requirement information of the computing sub-task in the computing task, the candidate execution node of the computing sub-task, and the like. Therefore, the first network element may obtain corresponding information based on the identification information of the computing task or the identification information of the computing sub-task.

For the running requirement information of the computing sub-task, refer to related descriptions of step 302 in FIG. 3. Details are not described herein again. The candidate execution node of the computing sub-task may include at least one computing converged node and/or the terminal device.

Optionally, the second information may further include the identification information of the computing sub-task.

902: The first network element determines the first computing QoS parameter of the computing sub-task based on the QoS parameter of the computing task.

Step 902 is similar to step 503 in FIG. 5. Details are not described herein again.

After step 902, step 903 to step 905 may be further performed; or step 906 and step 907 may be further performed. For ease of differentiation, step 903 to step 905 may be used as an implementation, for example, Manner A; and step 906 and step 907 may be used as another implementation, for example, Manner B.

### Manner A

903: The first network element sends the first computing QoS parameter to the terminal device.

Correspondingly, the terminal device receives the first computing QoS parameter from the first network element.

For step 903, refer to step 504 in FIG. 5. Details are not described herein again.

When the first information indicates that the execution node of the computing sub-task is the computing network converged node (the computing network converged node may be any computing network converged node in general, that is, a specific computing network converged node is not limited), step 904 may be further performed after step 903.

904: The terminal device sends third information to a second network element, where the third information is used to obtain an access address of the computing sub-task, and the access address is an address of a first computing network converged node or an address of a gateway of the first computing network converged node.

Correspondingly, the second network element receives the third information from the terminal device.

For step 904, refer to step 505 in FIG. 5. Details are not described herein again.

905: The terminal device receives an access address from the second network element.

Correspondingly, the second network element sends the access address to the terminal device. In this way, the terminal device may obtain an execution result of the computing sub-task by using the access address.

For step 905, refer to step 506 in FIG. 5. Details are not described herein again.

### Manner B

906: The first network element sends fifth information to a second network element, where the fifth information includes the first computing QoS parameter, and the fifth information further indicates the second network element to determine an access address of the computing sub-task.

Correspondingly, the second network element receives the fifth information from the first network element.

For step 906, refer to step 507 in FIG. 5. Details are not described herein again.

907: The second network element determines, based on the first computing QoS parameter, a first computing network converged node that executes the computing sub-task, and sends the access address of the computing sub-task to the terminal device, where the access address is an address of the first computing network converged node or an address of a gateway of the first computing network converged node.

Correspondingly, the terminal device receives the access address from the second network element. In this way, the terminal device may obtain an execution result of the computing sub-task by using the access address.

Step 907 is similar to step 508 in FIG. 5. Details are not described herein again.

It can be learned that, in the foregoing embodiment, for a case in which the computing sub-task is executed on the computing network converged node, the terminal device may further learn of the access address of the computing sub-task, and then may further obtain the execution result of the computing sub-task by using the access address. In this way, when memory resources are limited, the execution result of the computing sub-task can still be obtained. This can ensure that the computing task is successfully executed, that is, ensure normal running of an application program, thereby improving user experience.

Optionally, the embodiment in FIG. 9 may be performed after step 602 in FIG. 6.

It can be understood that, to implement the foregoing functions, the devices include corresponding hardware structures and/or software modules for executing the functions. A person skilled in the art should be easily aware that, in combination with units and algorithm steps of the examples described in embodiments disclosed in this specification, this application may be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device, the first network element, the second network element, or the like may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

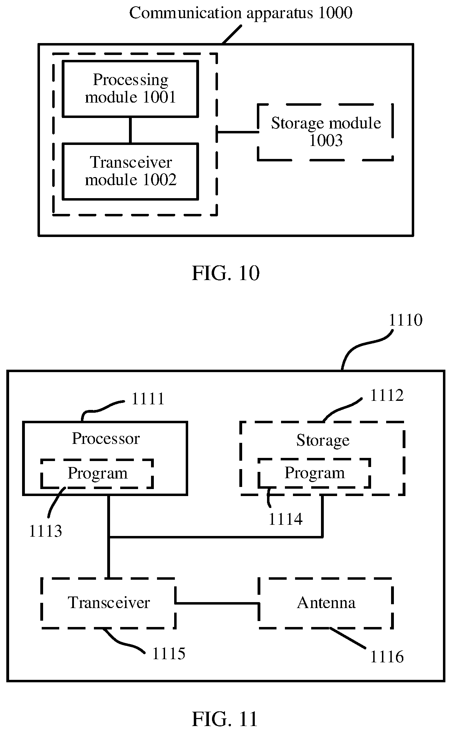

FIG. 10 is a diagram of a structure of a communication apparatus according to an embodiment of this application. The communication apparatus 1000 may be applied to the method shown in any one of the embodiments in FIG. 3 to FIG. 6 and FIG. 9. As shown in FIG. 10, the communication apparatus 1000 includes a processing module 1001 and a transceiver module 1002. The processing module 1001 may be one or more processors, and the transceiver module 1002 may be a transceiver or a communication interface. In other words, the transceiver module 1002 includes a sending module and/or a receiving module. The sending module is configured to perform a sending action in the method shown in any one of the embodiments in FIG. 3 to FIG. 6 and FIG. 9, and the receiving module is configured to perform a receiving action in the method shown in any one of the embodiments in FIG. 3 to FIG. 6 and FIG. 9. The communication apparatus may be configured to implement the terminal device, the first network element, or the second network element in any one of the foregoing method embodiments, or configured to implement a function of the network element in any one of the foregoing method embodiments. The network element or network function may be a network element in a hardware device, a software function running on dedicated hardware, or a virtualized function instantiated on a platform (for example, a cloud platform). Optionally, the communication apparatus 1000 may further include a storage module 1003, configured to store program code and data of the communication apparatus 1000.

In an example, when the communication apparatus serves as a terminal device or a chip used in the terminal device, and performs steps performed by the terminal device in the foregoing method embodiments, the transceiver module 1002 is configured to specifically perform a sending action and/or a receiving action performed by the terminal device in any one of the embodiments in FIG. 3 to FIG. 6 and FIG. 9, for example, support the terminal device in performing another process of the technology described in this specification; and the processing module 1001 may be configured to support the communication apparatus 1000 in performing a processing action in the foregoing method embodiments, for example, support the terminal device in performing another process of the technology described in this specification.

For example, the transceiver module 1002 is configured to obtain a QoS parameter of a computing task and an available computing resource of the terminal device; and the processing module 1001 is configured to determine an execution node of a computing sub-task in the computing task based on the QoS parameter of the computing task and the available computing resource of the terminal device, where the execution node of the computing sub-task is a computing network converged node or the terminal device.

Optionally, when the execution node of the computing sub-task in the computing task is determined based on the QoS parameter of the computing task and the available computing resource of the terminal device, there is an association relationship between the computing sub-task and another computing sub-task in the computing task; and the processing module 1001 is configured to determine the execution node of the computing sub-task based on the association relationship, the QoS parameter of the computing task, and the available computing resource of the terminal device.

Optionally, the processing module 1001 is further configured to determine a first computing QoS parameter of the computing sub-task based on the QoS parameter of the computing task and the available computing resource of the terminal device.

Optionally, when determining the first computing QoS parameter of the computing sub-task based on the QoS parameter of the computing task and the available computing resource of the terminal device, the processing module 1001 is configured to: there is an association relationship between the computing sub-task and another computing sub-task in the computing task; and determine the first computing QoS parameter based on the association relationship, the QoS parameter of the computing task, and the available computing resource of the terminal device.

Optionally, the transceiver module 1002 is further configured to: receive the first computing QoS parameter of the computing sub-task from a first network element; or receive the first computing QoS parameter from a second network element.

Optionally, the transceiver module 1002 is further configured to send first information to the first network element, where the first information is used to obtain the first computing QoS parameter, the first information includes the QoS parameter of the computing task and/or identification information of the computing task, the identification information of the computing task is used to determine the QoS parameter of the computing task, and the first computing QoS parameter is determined based on the QoS parameter of the computing task.

Optionally, the transceiver module 1002 is further configured to send the available computing resource of the terminal device to the first network element. That the first computing QoS parameter is determined based on the QoS parameter of the computing task includes: The first computing QoS parameter is determined based on the QoS parameter of the computing task and the available computing resource of the terminal device.

Optionally, there is an association relationship between the computing sub-task and another computing sub-task in the computing task. The transceiver module 1002 is further configured to send the association relationship to the first network element. That the first computing QoS parameter is determined based on the QoS parameter of the computing task and the available computing resource of the terminal device includes: The first computing QoS parameter is determined based on the association relationship, the QoS parameter of the computing task, and the available computing resource of the terminal device.

Optionally, the transceiver module 1002 is further configured to send second information to the first network element, where the second information indicates that the execution node of the computing sub-task is the computing network converged node or the terminal device.

Optionally, the second information indicates that the execution node of the computing sub-task is the computing network converged node; and the transceiver module 1002 is further configured to receive an access address of the computing sub-task from the second network element, where the access address is an address of a first computing network converged node or an address of a gateway of the first computing network converged node, and the first computing network converged node is a node that executes the computing sub-task.

Optionally, the transceiver module 1002 is further configured to send third information to the second network element, where the third information is used to obtain the access address.

Optionally, the second information includes the first computing QoS parameter of the computing sub-task; and the transceiver module 1002 is further configured to receive fourth information from the first network element, where the fourth information indicates whether the first computing QoS parameter is allowed to be used or not, or the fourth information indicates a second computing QoS parameter of the computing sub-task.

Optionally, the transceiver module 1002 is further configured to indicate, to a first network element, that the first computing QoS parameter is allowed to be modified.

For another example, the transceiver module 1002 is configured to: send information about a computing sub-task in a computing task to the first network element, where the information about the computing sub-task indicates that an execution node of the computing sub-task is to be specified; and receive first information from the first network element, where the first information indicates that the execution node of the computing sub-task is a computing network converged node or the terminal device.

Optionally, the transceiver module 1002 is further configured to obtain a quality of service QoS parameter of the computing task and an available computing resource of the terminal device; and the processing module 1001 is configured to generate the information about the computing sub-task based on the QoS parameter of the computing task and the available computing resource of the terminal device.

Optionally, when the information about the computing sub-task is generated based on the QoS parameter of the computing task and the available computing resource of the terminal device, there is an association relationship between the computing sub-task and another computing sub-task in the computing task; and the processing module 1001 is configured to generate the information about the computing sub-task based on the association relationship, the QoS parameter of the computing task, and the available computing resource of the terminal device.

Optionally, the transceiver module 1002 is further configured to: receive a computing QoS parameter of the computing sub-task from the first network element; or receive a computing QoS parameter from a second network element.

Optionally, the transceiver module 1002 is further configured to send second information to the first network element, where the second information is used to request to obtain the computing QoS parameter, the second information includes the QoS parameter of the computing task and/or identification information of the computing task, the identification information of the computing task is used to determine the QoS parameter of the computing task, and the computing QoS parameter is determined based on the QoS parameter of the computing task.

Optionally, the transceiver module 1002 is further configured to send the available computing resource of the terminal device to the first network element. That the computing QoS parameter is determined based on the QoS parameter of the computing task includes: The computing QoS parameter is determined based on the QoS parameter of the computing task and the available computing resource of the terminal device.

Optionally, there is an association relationship between the computing sub-task and another computing sub-task in the computing task. The transceiver module 1002 is further configured to send the association relationship to the first network element. That the computing QoS parameter is determined based on the QoS parameter of the computing task and the available computing resource of the terminal device includes: The computing QoS parameter is determined based on the association relationship, the QoS parameter of the computing task, and the available computing resource of the terminal device.

Optionally, the transceiver module 1002 is further configured to receive an access address of the computing sub-task from the second network element, where the access address is an address of a first computing network converged node or an address of a gateway of the first computing network converged node, and the first computing network converged node is a node that executes the computing sub-task.

Optionally, the transceiver module 1002 is further configured to send third information to the second network element, where the third information is used to obtain the access address.

In another example, when the communication apparatus serves as a first network element or a chip used in the first network element, and performs steps performed by the first network element in the foregoing method embodiments, the transceiver module 1002 is configured to specifically perform a sending action and/or a receiving action performed by the first network element in any one of the embodiments in FIG. 3, FIG. 7, FIG. 8, and FIG. 9, for example, support the first network element in performing another process of the technology described in this specification; and the processing module 1001 may be configured to support the communication apparatus 1000 in performing a processing action in the foregoing method embodiments, for example, support the first network element in performing another process of the technology described in this specification.

For example, the transceiver module 1002 is configured to: receive information about a computing sub-task in a computing task from a terminal device, where the information about the computing sub-task indicates that an execution node of the computing sub-task is to be specified; and send first information to the terminal device, where the first information indicates that the execution node of the computing sub-task is a computing network converged node or the terminal device.

Optionally, the transceiver module 1002 is further configured to: send a computing QoS parameter of the computing sub-task to the terminal device; or send fifth information to a second network element, where the fifth information includes the computing QoS parameter.

Optionally, the transceiver module 1002 is further configured to receive second information from the terminal device, where the second information is used to request to obtain the computing QoS parameter, the second information includes a QoS parameter of the computing task and/or identification information of the computing task, and the identification information of the computing task is used to determine the QoS parameter of the computing task; and the processing module 1001 is further configured to determine the computing QoS parameter based on the QoS parameter of the computing task.

Optionally, the transceiver module 1002 is further configured to receive an available computing resource from the terminal device; and when determining the computing QoS parameter based on the QoS parameter of the computing task, the processing module 1001 is configured to determine the computing QoS parameter based on the QoS parameter of the computing task and the available computing resource.

Optionally, there is an association relationship between the computing sub-task and another computing sub-task in the computing task. The transceiver module 1002 is further configured to receive the association relationship from the terminal device. When determining the computing QoS parameter based on the QoS parameter of the computing task and the available computing resource, the processing module 1001 is configured to determine the computing QoS parameter based on the association relationship, the QoS parameter of the computing task, and the available computing resource.

Optionally, the transceiver module 1002 is further configured to obtain a computing resource of at least one computing network converged node and transmission status information between the terminal device and the first network element; and the processing module 1001 is further configured to determine the execution node of the computing sub-task based on the available computing resource of the terminal device, the computing resource of the at least one computing network converged node, and the transmission status information between the terminal device and the first network element.

Optionally, when determining the execution node of the computing sub-task based on the available computing resource of the terminal device, the computing resource of the at least one computing network converged node, and the transmission status information between the terminal device and the first network element, the processing module 1001 is configured to determine the execution node of the computing sub-task based on the available computing resource of the terminal device, the computing resource of the at least one computing network converged node, the transmission status information between the terminal device and the first network element, and the association relationship between the computing sub-task and the another computing sub-task.

In another example, when the communication apparatus serves as a second network element or a chip used in the second network element, and performs steps performed by the second network element in the foregoing method embodiments, the transceiver module 1002 is configured to specifically perform a sending action and/or a receiving action performed by the second network element in any one of the embodiments in FIG. 3 to FIG. 6 and FIG. 9, for example, support the second network element in performing another process of the technology described in this specification; and the processing module 1001 may be configured to support the communication apparatus 1000 in performing a processing action in the foregoing method embodiments, for example, support the second network element in performing another process of the technology described in this specification.

For example, the transceiver module 1002 is configured to send an access address of a computing sub-task in a computing task to a terminal device, where the access address is an address of a first computing network converged node or an address of a gateway of the first computing network converged node, and the first computing network converged node is a node that executes the computing sub-task.

Optionally, the transceiver module 1002 is further configured to send a first computing QoS parameter of the computing sub-task to the terminal device.

Optionally, the transceiver module 1002 is further configured to receive third information from the terminal device, where the third information is used to obtain the access address.

Optionally, the transceiver module 1002 is further configured to receive fifth information from a first network element, where the fifth information includes the first computing QoS parameter of the computing sub-task.

In a possible implementation, when the terminal device, the first network element, or the second network element is a chip, the transceiver module 1002 may be a communication interface, a pin, a circuit, or the like. The communication interface may be configured to input to-be-processed data to a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 1001 may be a processor. The processor may execute computer-executable instructions stored in the storage module, so that the chip performs the method in any one of the embodiments in FIG. 3 to FIG. 6 and FIG. 9. Further, the processor may include a controller, an arithmetic logic unit, and a register. For example, the controller is mainly responsible for decoding instructions, and sending a control signal for an operation corresponding to the instructions. The arithmetic logic unit is mainly responsible for performing a fixed-point or floating-point arithmetic operation, a shift operation, a logic operation, and the like, and may also perform an address operation and address translation. The register is mainly responsible for storing a quantity of register operations, intermediate operation results, and the like that are temporarily stored during instruction execution. During specific implementation, a hardware architecture of the processor may be an application-specific integrated circuit (application-specific integrated circuit, ASIC) architecture, a microprocessor without interlocked piped stages architecture (microprocessor without interlocked piped stages architecture, MIPS) architecture, an advanced reduced instruction set computer machines (advanced RISC machines, ARM) architecture, a second processor (network processor, NP) architecture, or the like. The processor may be a single-core processor or a multi-core processor. The storage module may be a storage module inside the chip, for example, a register or a cache. Alternatively, the storage module may be a storage module located outside the chip, for example, a read-only memory (read-only memory, ROM), another type of static storage device that can store static information and instructions, a random access memory (random access memory, RAM), or the like.

It should be noted that a function corresponding to each of the processor and the interface may be implemented by using a hardware design, or may be implemented by using a software design, or may be implemented by a combination of software and hardware. This is not limited herein.

FIG. 11 is a diagram of a structure of another communication apparatus according to an embodiment of this application. It may be understood that the communication apparatus 1110 includes means in necessary forms, such as modules, units, elements, circuits, or interfaces, which are appropriately configured together to execute the solution. The communication apparatus 1110 may be the terminal device, the first network element, or the second network element above, or may be a component (for example, a chip) in these devices, to implement the methods described in the foregoing method embodiments. The communication apparatus 1110 includes one or more processors 1111. The processor 1111 may be a general-purpose processor, a dedicated processor, or the like. For example, the processor 1111 may be a baseband processor or a central processing unit. The baseband processor may be configured to process a communication protocol and communication data. The central processing unit may be configured to control the communication apparatus (for example, the terminal device, the first network element, the second network element, or the chip) to execute a software program and process data of the software program.

Optionally, in a design, the processor 1111 may include a program 1113 (which may also be sometimes referred to as code or instructions). The program 1113 may be run on the processor 1111, to enable the communication apparatus 1110 to perform the methods described in the foregoing embodiments. In another possible design, the communication apparatus 1110 includes a circuit (not shown in FIG. 11), and the circuit is configured to implement a function of the terminal device, the first network element, the second network element, or the like in the foregoing embodiments. Optionally, the communication apparatus 1110 may include one or more storages 1112, and a program 1114 (which may also be sometimes referred to as code or instructions) is stored in the storage 1112. The program 1114 may be run on the processor 1111, to enable the communication apparatus 1110 to perform the methods described in the foregoing method embodiments.

Optionally, the processor 1111 and/or the storage 1112 may further store data. The processor and the storage may be independently disposed, or may be integrated together.

Optionally, the communication apparatus 1110 may further include a transceiver 1115 and/or an antenna 1116. The processor 1111 may also be sometimes referred to as a processing unit, and controls the communication apparatus (for example, the terminal device, the first network element, or the second network element). The transceiver 1115 may also be sometimes referred to as a transceiver unit, a transceiver machine, a transceiver circuit, a transceiver, or the like, and is configured to implement receiving and sending functions of the communication apparatus through the antenna 1116.

Optionally, the transceiver 1115 may include a transmitter and/or a receiver. The transmitter may be referred to as a sending unit, a transmitter machine, a transmitter circuit, or the like, and is configured to implement a sending function. The receiver may be referred to as a receiving unit, a receiver machine, a receiver circuit, or the like, and is configured to implement a receiving function. When the communication apparatus 1110 is a chip in the terminal device, the first network element, or the second network element, the transceiver 1115 may be an input/output interface of the chip, which may respectively correspond to receiving and sending in any one of the embodiments in FIG. 3 to FIG. 6 and FIG. 9.

An embodiment of this application further provides a communication apparatus. The communication apparatus includes at least one processor. The at least one processor is configured to perform the method in any one of the embodiments in FIG. 3 to FIG. 6 and FIG. 9.

An embodiment of this application further provides a computer-readable storage medium. The computer-readable storage medium stores computer instructions. When the computer instructions are executed, a computer is enabled to perform the method in any one of the embodiments in FIG. 3 to FIG. 6 and FIG. 9.

An embodiment of this application further provides a computer program product. The computer program product includes computer program code. When the computer program code is run on a computer, the computer is enabled to perform the method in any one of the embodiments in FIG. 3 to FIG. 6 and FIG. 9.

An embodiment of this application further provides a chip. The chip includes at least one processor and an interface. The processor is configured to read and execute instructions stored in a storage. When the instructions are run, the chip is enabled to perform the method in any one of the embodiments in FIG. 3 to FIG. 6 and FIG. 9.

The units described as separate parts may be or may not be physically separate, and parts displayed as units may be or may not be physical units, that is, may be located in one place, or may be distributed on a plurality of network units. Some or all of the units may be selected based on an actual requirement, to achieve the objectives of the solutions in embodiments of this application. In addition, network element units in embodiments of this application may be integrated into one processing unit, each of the units may exist alone physically, or two or more units may be integrated into one unit. The integrated unit may be implemented in a form of hardware, or may be implemented in a form of a software network element unit.

When the integrated unit is implemented in the form of a software network element unit and sold or used as an independent product, the integrated unit may be stored in a computer-readable storage medium. Based on such an understanding, a part that essentially contributes to the technical solutions of this application or all or a part of the technical solutions may be embodied in a form of a software product. The computer software product is stored in a storage medium, and includes several instructions for enabling a computer device (which may be a personal computer, a terminal device, a cloud server, a network device, or the like) to perform all or some steps of the methods in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining a quality of service QoS parameter of a computing task and an available computing resource of a terminal device; and
determining an execution node of a computing sub-task in the computing task based on the QoS parameter of the computing task and the available computing resource of the terminal device, wherein the execution node of the computing sub-task is a computing network converged node or the terminal device.

2. The method according to claim 1, wherein determining the execution node of the computing sub-task in the computing task based on the QoS parameter of the computing task and the available computing resource of the terminal device comprises:
there is an association relationship between the computing sub-task and another computing sub-task in the computing task; and
determining the execution node of the computing sub-task based on the association relationship, the QoS parameter of the computing task, and the available computing resource of the terminal device.

3. The method according to claim 1 or 2, wherein the method further comprises:
determining a first computing QoS parameter of the computing sub-task based on the QoS parameter of the computing task and the available computing resource of the terminal device.

4. The method according to claim 3, wherein determining the first computing QoS parameter of the computing sub-task based on the QoS parameter of the computing task and the available computing resource of the terminal device comprises:
there is an association relationship between the computing sub-task and another computing sub-task in the computing task; and
determining the first computing QoS parameter based on the association relationship, the QoS parameter of the computing task, and the available computing resource of the terminal device.

5. The method according to claim 1 or 2, wherein the method further comprises:
receiving a first computing QoS parameter of the computing sub-task from a first network element; or
receiving the first computing QoS parameter from a second network element.

6. The method according to claim 5, wherein the method further comprises:
sending first information to the first network element, wherein the first information is used to obtain the first computing QoS parameter, the first information comprises the QoS parameter of the computing task and/or identification information of the computing task, the identification information of the computing task is used to determine the QoS parameter of the computing task, and the first computing QoS parameter is determined based on the QoS parameter of the computing task.

7. The method according to claim 5 or 6, wherein the method further comprises:
sending the available computing resource of the terminal device to the first network element,
wherein
that the first computing QoS parameter is determined based on the QoS parameter of the computing task comprises:
the first computing QoS parameter is determined based on the QoS parameter of the computing task and the available computing resource of the terminal device.

8. The method according to claim 7, wherein the method further comprises:
there is an association relationship between the computing sub-task and another computing sub-task in the computing task; and
sending the association relationship to the first network element, wherein
that the first computing QoS parameter is determined based on the QoS parameter of the computing task and the available computing resource of the terminal device comprises:
the first computing QoS parameter is determined based on the association relationship, the QoS parameter of the computing task, and the available computing resource of the terminal device.

9. The method according to any one of claims 1 to 8, wherein the method further comprises:
sending second information to the first network element, wherein the second information indicates that the execution node of the computing sub-task is the computing network converged node or the terminal device.

10. The method according to claim 9, wherein the second information comprises the first computing QoS parameter of the computing sub-task.

11. The method according to claim 9 or 10, wherein the second information indicates that the execution node of the computing sub-task is the computing network converged node, and the method further comprises:
receiving an access address of the computing sub-task from the second network element, wherein the access address is an address of a first computing network converged node or an address of a gateway of the first computing network converged node, and the first computing network converged node is a node that executes the computing sub-task.

12. The method according to claim 11, wherein the method further comprises:
sending third information to the second network element, wherein the third information is used to obtain the access address.

13. The method according to claim 10, wherein the method further comprises:
receiving fourth information from the first network element, wherein the fourth information indicates whether the first computing QoS parameter is allowed to be used or not, or the fourth information indicates a second computing QoS parameter of the computing sub-task.

14. The method according to claim 13, wherein the fourth information indicates that the first computing QoS parameter is not allowed to be used, and the fourth information further indicates the second computing QoS parameter.

15. The method according to claim 13, wherein the method further comprises:
indicating, to the first network element, that the first computing QoS parameter is allowed to be modified.

16. A communication method, comprising:
sending information about a computing sub-task in a computing task to a first network element, wherein the information about the computing sub-task indicates that an execution node of the computing sub-task is to be specified; and
receiving first information from the first network element, wherein the first information indicates that the execution node of the computing sub-task is a computing network converged node or a terminal device.

17. The method according to claim 16, wherein the method further comprises:
obtaining a quality of service QoS parameter of the computing task and an available computing resource of the terminal device; and
generating the information about the computing sub-task based on the QoS parameter of the computing task and the available computing resource of the terminal device.

18. The method according to claim 17, wherein generating the information about the computing sub-task based on the QoS parameter of the computing task and the available computing resource of the terminal device comprises:
there is an association relationship between the computing sub-task and another computing sub-task in the computing task; and
generating the information about the computing sub-task based on the association relationship, the QoS parameter of the computing task, and the available computing resource of the terminal device.

19. The method according to any one of claims 16 to 18, wherein the method further comprises:
receiving a first computing QoS parameter of the computing sub-task from the first network element; or
receiving the first computing QoS parameter from a second network element.

20. The method according to claim 19, wherein the method further comprises:
sending second information to the first network element, wherein the second information is used to request to obtain the first computing QoS parameter, the second information comprises the QoS parameter of the computing task and/or identification information of the computing task, the identification information of the computing task is used to determine the QoS parameter of the computing task, and the first computing QoS parameter is determined based on the QoS parameter of the computing task.

21. The method according to claim 19 or 20, wherein the method further comprises:
sending the available computing resource of the terminal device to the first network element,
wherein
that the first computing QoS parameter is determined based on the QoS parameter of the computing task comprises:
the first computing QoS parameter is determined based on the QoS parameter of the computing task and the available computing resource of the terminal device.

22. The method according to claim 21, wherein the method further comprises:
there is an association relationship between the computing sub-task and another computing sub-task in the computing task; and
sending the association relationship to the first network element, wherein
that the first computing QoS parameter is determined based on the QoS parameter of the computing task and the available computing resource of the terminal device comprises:
the first computing QoS parameter is determined based on the association relationship, the QoS parameter of the computing task, and the available computing resource of the terminal device.

23. The method according to any one of claims 16 to 22, wherein the method further comprises:
receiving an access address of the computing sub-task from the second network element, wherein the access address is an address of a first computing network converged node or an address of a gateway of the first computing network converged node, and the first computing network converged node is a node that executes the computing sub-task.

24. The method according to claim 23, wherein the method further comprises:
sending third information to the second network element, wherein the third information is used to obtain the access address.

25. The method according to any one of claims 16 to 24, wherein the information about the computing sub-task further indicates an execution node of the computing sub-task that is expected by the terminal device; and
the terminal device expects the execution node of the computing sub-task to be the terminal device, and the first information indicates that the execution node of the computing sub-task is the computing network converged node; or
the terminal device expects the execution node of the computing sub-task to be the computing network converged node, and the first information indicates that the execution node of the computing sub-task is the terminal device.

26. A communication apparatus, comprising a unit or module configured to implement the method according to any one of claims 1 to 25.

27. A communication apparatus, wherein the communication apparatus comprises at least one processor, and the at least one processor is configured to perform the method according to any one of claims 1 to 25.

28. A computer-readable storage medium, wherein the computer-readable storage medium stores computer instructions; and when the computer instructions are executed, the computer is enabled to perform the method according to any one of claims 1 to 25.

29. A computer program product, wherein the computer program product comprises computer program code; and when the computer program code is run on a computer, the computer is enabled to perform the method according to any one of claims 1 to 25.

30. A chip, wherein the chip comprises at least one processor and an interface; the processor is configured to read and execute instructions stored in a storage; and when the instructions are run, the chip is enabled to perform the method according to any one of claims 1 to 25.
